Europäisches Patentamt

European Patent Office

Office européen des brevets

(19)

(11) EP 1 271 378 A2

(12) EUROPEAN PATENT APPLICATION

(43) Date of publication:
02.01.2003 Bulletin 2003/01

(51) Int Cl.⁷: G06F 17/60

(21) Application number: 02014034.9

(22) Date of filing: 27.06.2002

(84) Designated Contracting States:
AT BE CH CY DE DK ES FI FR GB GR IE IT LI LU
MC NL PT SE TR
Designated Extension States:
AL LT LV MK RO SI

(30) Priority: 29.06.2001 JP 2001199911
28.11.2001 JP 2001363366
25.12.2001 JP 2001391897
18.02.2002 JP 2002040602

(71) Applicant: TERAOKA SEIKO CO., LTD.
Ohta-ku Tokyo (JP)

(72) Inventors:
• Teraoka, Kazuharu
  Ohta-ku, Tokyo (JP)
• Oono, Tetsuo
  Ohta-ku, Tokyo (JP)
• Kanno, Tatsuya
  Ohta-ku, Tokyo (JP)

(74) Representative: Hinkelmann, Klaus et al
Diehl Glaeser Hiltl & Partner
Patentanwälte
Augustenstrasse 46
80333 München (DE)

(54) **Administration process and system for manufacturing and selling products**

(57) A pack ID number which can individually identify each product is printed as a machine readable code such as a barcode on the price label of a perishable food product, and a block ID number linked with the pack ID number for identifying the raw material block used in the manufacture of the product, and other data required when performing product registration at the checkout such as the product code and price, and data on the expiry date of the product are stored. Consequently, it is possible to total manufacturing data for each perishable food raw material block. A processing method and device is also provided for product manufacturing data and product sales data, which can perform accurate inventory control and gross margin administration for each purchased perishable food block, and can automatically determine whether or not a product has expired. Furthermore, the present invention also provides a product discounting method, a product registration method, a pricing device, a POS system, a product pricing and registration system, and a product discounting method and discounting system.

FIG. 1

EP 1 271 378 A2

**Description**

BACKGROUND OF THE INVENTION

Field of the Invention

The present invention relates to an administration process and system for manufacturing and selling products, and relates specifically to a processing method and a processing device for processing manufacturing data and sales data of products, a product pricing process and pricing device and a POS system, a product pricing and registration system, and a product discounting process and discounting system.

Description of the Related Art

A first problem in the related art is described below.

Because perishable foods such as dressed meat undergo processing at a store, the form of the product purchased by the store differs from the form of the product sold by the store. For example, the store purchases meat in block units from a meat wholesaler, and manufactures a variety of differently priced products such as "beef (for sukiyaki)", "beef (for shabushabu)", or "beef (for steak)" from this purchased meat block (for example a beef block), and these products are then priced and displayed on a rack for sale to customers.

Furthermore, because the shelf life of such perishable foods is short, products which are past their expiry date must be marked for disposal.

As mentioned above, because with perishable foods a plurality of differently priced products are manufactured from a product purchased in block units, and because discounting and disposal of products is performed frequently according to the time that has passed since the product was manufactured, conventionally, problems occurred in that inventory control and the management of gross margins for each purchased block unit were troublesome, and accurate data could not be obtained.

Furthermore, conventionally, it was impossible to obtain inventory data and sales data for products manufactured from a specific block, and managing these figures was by rough estimate only. Consequently, a problem occurred in that the setting of prices, and the establishment of manufacturing plans and sales plans could not be performed on the basis of accurate data.

Furthermore, conventionally, products were checked periodically by employees and marked for disposal when past their expiry date, but this operation is troublesome, and furthermore, an employee may miss a product which is past its expiry date, which may then be inadvertently sold, thereby potentially reducing the trust the customer has in the store.

Furthermore, a second problem is described below.

In the aforementioned system, at the checkout where the customer pays for the product he/she purchases, an ID number on the product is read, stored manufacturing data is retrieved using this ID number, and product registration processing is then performed. In order to realize this type of system, the design of the system must be such that the product registration process (checkout process) can be performed unimpeded even when the manufacturing data cannot be retrieved during registration due to such problems as an inability to communicate with the administration device (server) where the manufacturing data is stored.

Furthermore, in order to ensure that the aforementioned system can be adopted smoothly by users of an older system, it is desirable that the system is designed so that the operations currently performed by users (such as the clearance product discounting process, wherein perishable food products which are losing freshness are sold at a discount) are not changed drastically, and that current equipment (such as barcode scanners and the like) does not need to be replaced.

In addition, a third problem is described below.

Recently, due to the emergence of "mad cow disease" as a social problem, customers increasingly want to know the manufacturing channels of the perishable foods such as meat and fish which they purchase, so that they can be sure of the safety of the products.

On the other hand, a store needs to secure repeat customers by informing this type of customer of the fact that the manufacturing channels of its products are known and are safe.

However, a system which meets these needs of both the customer and the store has not yet been developed.

Furthermore, a fourth problem is described below.

Because the commercial value of perishable foods and daily dishes and the like decreases according to their freshness, the amount of product which remains unsold is decreased by discounting products for which a predetermined length of time has passed since manufacturing or processing (clearance products).

In a conventional method for discounting clearance products, an employee (1) takes a portable label printer onto the selling floor, (2) keys in the amount of the discount or the discounted price of the product, and scans the barcode of the price label of the product to be discounted and issues a barcode label with the discounted price, (3) applies the newly issued barcode label over the top of the original price label, and (4) affixes a POP label to the product which informs the customer of the discounted price.

However, in this conventional discounting method, because an employee must take a label printer onto the selling floor, and issue barcode labels with the discounted price on the selling floor, and because the issued barcode label must then be applied over the top of the original price label of the product, the work required is very troublesome and time consuming.

SUMMARY OF THE INVENTION

In consideration of the above circumstances, and in order to solve the aforementioned first problem, a first object of the present invention is to provide a method and a device for processing product manufacturing data and product sales data, which is capable of performing accurate inventory control and managing gross margins for block units of perishable foods, and is capable of automatically determining whether or not a product is past its expiry date.

Furthermore, in order to solve the aforementioned second problem, a second object of the present invention is to provide a product pricing method and a product registration processing method wherein an ID number which can individually identify each product is printed as a barcode on the price labels of perishable foods, manufacturing data is stored linked with this ID number, and the checkout process is performed based on this ID number, and at the checkout (during the product registration process), the product registration process can be performed even when the stored manufacturing data cannot be retrieved.

Furthermore, another object of the present invention is to provide a product pricing method and a product registration processing method which can be implemented with as few changes as possible to conventional operating methods and conventional devices.

Furthermore, in order to solve the aforementioned third problem, a third object of the present invention is to provide a product pricing and registration system wherein the customer can easily check the manufacturing channel information of purchased products, if he/she wishes.

In addition, in order to solve the aforementioned fourth problem, a fourth object of the present invention is to provide a product discounting method and discounting system wherein the operation required for discounting a product can be simplified.

MEANS FOR SOLVING THE PROBLEMS

In order to achieve the aforementioned first object, the present invention provides a product manufacturing data processing method wherein a first ID number (pack ID number) for individually identifying each product is printed on the price labels of perishable foods as a machine readable code such as a barcode, and manufacturing data including a second ID number (block ID number) linked to the first ID number (pack ID number) for identifying the raw material block from which the product was manufactured, is stored.

According to the aforementioned invention, because a second ID number (block ID number) for identifying the raw material block is stored for each perishable food product (for each pack ID) as part of the manufacturing (log) data, it is possible to total manufacturing data for each raw material block unit.

Furthermore, because a second ID number is stored for each pack ID number, if defective goods are detected after sale, or if a complaint is received from a customer, a determination can be made as to which raw material block was used in the product manufacture, and it is therefore possible to investigate the purchase date, the manufacturer from whom the product was purchased, and the person in charge of the purchase and the like, and thereby trace the source of the defect, which leads to accountability in manufacturing control.

In this case, it is preferable that the manufacturing, data which is stored linked with the first ID number (pack ID number), includes the data required for product registration at the checkout such as the product code and price.

According to the aforementioned invention, because the data required for product registration such as the product code and price is included in the manufacturing data for each product, it is possible for product registration to be performed using this data.

Furthermore, it is preferable that data relating to the expiry date of the product is also included in the manufacturing data which is stored linked with the first ID number (pack ID number).

According to the aforementioned invention, because data on the expiry date of the product is included in the manufacturing data for each product, it is possible to automatically determine if a product has expired using this data.

Furthermore, the present invention also provides a weighing and pricing device for weighing the product and calculating the price of the product based on the weight and the unit price of the product, and printing and issuing a label with the calculated price thereon, wherein the first ID number (pack ID number) for individually identifying each product is printed as a machine readable code such as a barcode on the label, and the data required for product registration at the checkout such as the product code and price, and the second ID number (the block ID number) which identifies the raw material block from which the product was manufactured are stored as manufacturing data linked with the first ID number.

According to the aforementioned invention, because a second ID number (the block ID number) for identifying the raw material block is stored for each perishable food product (for each pack ID) as part of the manufacturing (log) data, it is possible to total manufacturing data for each raw material block unit.

Furthermore, because a second ID number is stored for each pack ID number, if defective goods are detected after sale, or if a complaint is received from a customer, a determination can be made as to which raw material block was used in the product manufacture, and it is therefore possible to investigate the purchase date, the manufacturer from whom the product was purchased, and the person in charge of the purchase and the like, and thereby trace the source of the defect, which leads to accountability in manufacturing control.

In addition, because the data required for product registration such as the product code and price is included in the manufacturing data for each product, it is possible to perform product registration using this data.

Furthermore, the present invention also provides a product sales data processing method wherein when pricing a product, a first ID number (a pack ID number) for individually identifying each product is printed on the price label as a machine readable code such as a barcode, and manufacturing data including a second ID number (block ID number) linked to this first ID number (pack ID number) for identifying the raw material block from which the product was manufactured is stored, and at the checkout, sales data is totaled against this first ID number (the pack ID number)

In this case, it is preferable that the stored manufacturing data linked with the first ID number (pack ID number) includes the data required for product registration such as the product code and price, and at the checkout, this first ID number (pack ID number) is read from the price label of the product, and the data required in order to register the product identified by the first ID number (pack ID number) is read from the stored manufacturing data, and product registration is then performed based on this read data.

According to the aforementioned invention, because sales data is stored linked with the first ID number (the pack ID number), and because the second ID number (the block ID number) is stored linked with the first ID number (the pack ID number), sales data can be totaled for each raw material block.

Furthermore, when totaling the sales data, it is preferable that products which have been discounted can be differentiated from those products which have not, and that for a product which has been discounted, either the amount by which the product has been discounted, or the selling price of the product after the discount, can be determined when totaling data.

According to the aforementioned invention, it is possible to gather price discount data for each raw material block unit.

Furthermore, when a product is marked for disposal, it is preferable that the disposal data is totaled linked with the first ID number (the pack ID number) of the product.

According to the aforementioned invention, it is possible for the disposal data to be totaled for each raw material block unit.

Furthermore, it is preferable that the aforementioned sales data is extracted for each second ID number (block ID number), and that total sales data is calculated and totaled for each second ID number (block ID number).

According to the aforementioned invention, accurate sales data can be obtained for each raw material block unit. Consequently, trends in the sales data for each raw material block unit and accurate gross margins for each raw material block unit can be obtained.

Furthermore, because the data required for store management such as inventory data, gross margin data and product disposal data can be totaled accurately for each block unit, appropriate prices can be set, and manufacturing plans and sales plans can be established, based on accurate data.

Furthermore, it is preferable that the manufacturing data and the sales data are totaled and compared for each second ID number (block ID number), and the inventory data of the products is then calculated and totaled for each second ID number (block ID number).

According to the aforementioned invention, accurate inventory data can be obtained for each raw material block unit.

In addition, it is preferable that the aforementioned manufacturing data, sales data and product disposal data are totaled for each second ID number (block ID number), and that product loss data is then calculated and totaled for each second ID number (block ID number).

According to the aforementioned invention, accurate loss data can be obtained for each raw material block unit.

Furthermore, the present invention also provides a product sales data processing device comprising a manufacturing data storage device which stores manufacturing data including the second ID number (block ID number) which is linked with the first ID number (pack ID number) and identifies the data required for product registration such as

as the product code and price and the raw material block used to manufacture the product, an ID number reading device which reads the first ID number (the pack ID number) from the price label of the product purchased by the customer, and a totaling device which reads the data required for performing product registration for the product identified by the first ID number (the pack ID number) from the aforementioned manufacturing data recording device, performs the product registration based on this read data, and totals the sales data linked with the first ID number (the pack ID number).

According to the aforementioned invention, because sales data is stored linked with the first ID number (pack ID number), and because the second ID number (block ID number) is stored against the first ID number (pack ID number), sales data can be calculated for each raw material block unit.

Furthermore, the present invention also provides a product sales data processing method wherein when pricing a product, a first ID number (pack ID number) for individually identifying each product is printed on the price label as a machine readable code such as a barcode, manufacturing data including data on the expiry date of the product is stored linked with the first ID number (pack ID number), and at the checkout, the first ID number (pack ID number) is read from the price label of the product which the customer is purchasing, manufacturing data including data on the expiry date of the product identified by the first ID number (pack ID number) is retrieved from the aforementioned manufacturing data, the registration process for the product is performed based on this retrieved manufacturing data, and a determination is made as to whether or not a product has expired by comparing the retrieved expiry date data with the current date and time, and if the product is determined to have expired, then a warning indicating the expiry is conveyed.

According to the aforementioned invention, the determination of whether or not a product has expired can be performed automatically, and consequently, the possibility of an expired product being accidentally sold, thereby lowering the trust the customer has in the store, can be minimized.

In order to achieve the aforementioned second object, the present invention provides a product pricing method in which the pack ID number, which is an ID number (identification number) that can individually identify each product, is printed as a barcode on the price label of perishable food products, and manufacturing data linked with this ID number (identification number) including price data is stored as a manufacturing log, wherein the aforementioned pack ID and the aforementioned price data is printed on each product as a barcode.

According to the aforementioned invention, it is possible to individually manage manufacturing data for each perishable product, and it is also possible to manage inventory and gross margins for each block unit. It is also possible to complete the checkout process at the checkout using the data read by the barcode scanner without referring to the manufacturing data (manufacturing log).

In such cases, it is preferable that the aforementioned pack ID number and the aforementioned price data are printed on each of the aforementioned products as a one stage barcode.

According to the aforementioned invention, because the pack ID number, the price or the classification of the product are printed on each product as a one stage barcode, the form of the barcode is the same as that of a conventional NON PLU (Non Price Look Up) barcode, and because special barcodes such as two stage barcodes or two dimensional barcodes are not used, the barcodes can be read by the conventional barcode scanners currently used in stores, without requiring new hardware.

Furthermore, conventionally, when discounting products for clearance, the barcode of the product was read by a handy terminal, and a discount label on which the read product code and the discounted price are printed was issued and affixed over the top of the original pre-discount label, but because the form of the barcode is the same as that of conventional barcodes, the discounting process can continue to be performed in the conventional manner, and the same discounting process operation can be executed.

Furthermore, it is preferable that the manufacturing data, which includes the aforementioned price data, also includes data indicating the classification of the product, and that the aforementioned pack ID number, the category of the product and the aforementioned price data are all printed on each product as a barcode.

According to the aforementioned invention, at the checkout, the checkout process can be performed using the data read by the barcode scanner without referring to the manufacturing data (manufacturing log), and in addition, the classification of each product can also be printed on the receipt.

Furthermore, it is preferable that the aforementioned pack ID number, the classification of the product and the aforementioned price data are printed as a one stage barcode on each product.

Furthermore, it is preferable that the data which indicates the classification of the product is a flag comprising the first two digits of the data which constitutes the barcode.

Furthermore, it is preferable that the aforementioned ID number includes data indicating the classification of the product, and that the aforementioned ID number, the classification of the product and the aforementioned price data are printed on each product as a one stage barcode.

Furthermore, the present invention also provides a product registration processing method wherein when the barcode according to the aforementioned pricing method is read from the product at the checkout, the registration data is stored while the registration and payment process is performed based on the price data indicated by the read barcode, and subsequently, the stored registration data is calculated as sales performance data based on the aforementioned pack ID number.

According to the aforementioned invention, because the checkout process is performed using the data read by the barcode scanner without referring to the manufacturing data (manufacturing log), the checkout process can be performed efficiently. Furthermore, because sales data is subsequently calculated based on the pack ID number, accurate performance data can be totaled for each product, and inventory control and management of gross margins can easily be performed for each raw material block unit.

Furthermore, the present invention also provides a product registration processing method wherein when the barcode according to the aforementioned pricing method is read from the product at the checkout, the registration and payment process is performed based on the category of the product and the aforementioned price data indicated by the read barcode, and a receipt is issued on which the classification and price of the purchased product are printed, and the registration data is stored, and subsequently, the stored registration data is calculated as sales performance data based on the aforementioned pack ID number.

According to the aforementioned invention, the classification of each product can be printed on the receipt.

In this case, it is preferable that the aforementioned product registration processing method is executed in those cases in which the manufacturing data of the aforementioned pack ID number cannot be retrieved.

According to the aforementioned invention, when the manufacturing data (manufacturing log) cannot be read, the checkout process is performed using the data read by the barcode scanner, without referring to the manufacturing data (manufacturing log), and so even when communication with the administration device where the manufacturing data is stored is impossible, and the manufacturing data cannot be retrieved, the checkout process can still be performed unimpeded.

Furthermore, the present invention also provides a product having a barcode according to the aforementioned pricing method.

Furthermore, the present invention also provides a pricing device which measures the weight of a perishable food product, calculates the price of the product from the measured weight and the unit price of that particular perishable food product, prints a barcode comprising the pack ID number, which is an ID number (identification number) that can individually identify each perishable food product, and the price onto the price label, and stores manufacturing data, including the price, as a manufacturing log linked with this ID number (identification number).

According to the aforementioned invention, it is possible for the manufacturing data of perishable food products to be managed individually for each product, and for inventory control and management of gross margins to be performed for each raw material block unit, and at the checkout, the checkout process can be performed using the data read by the barcode scanner, without referring to the manufacturing data (manufacturing log).

In such a case, it is preferable that the aforementioned barcode is a one stage barcode which includes product classification data for the product.

In addition, the present invention also provides a POS system which performs processing based on the barcode read from the product, comprising an administration device which stores the manufacturing data linked with the pack ID number, and a POS terminal which communicates with this administration device, wherein when the barcode is read from the product at the checkout, if the manufacturing data of the pack ID number of the read barcode can be received from the administration device, the product registration process and the receipt printing process are performed based on the received manufacturing data, whereas if the manufacturing data for the pack ID number read from the barcode cannot be received from the administration device, the product registration process and the receipt printing process are performed based on the product classification and price read from the barcode, and the registration data is stored, and subsequently, the stored registration data is sent to the administration device, and the administration device stores the received registration data as sales performance data, based on the pack ID number.

According to the aforementioned invention, when the manufacturing data (manufacturing log) stored in the administration device can be retrieved, then by performing the checkout process based on the retrieved manufacturing data, it is possible to print the product name, the unit price and the weight and the like of the product on the receipt, although even if the manufacturing data (manufacturing log) cannot be retrieved, the checkout process can be performed based on the data read by the barcode scanner, and the classification of the product can be printed on the receipt. Consequently, the checkout process can still be performed even when the administration device is down.

In this case, it is preferable that the transaction data in the POS terminal, namely the registration and payment data, is stored as electronic journal data, and transaction data including the product referred to by a pack ID number can be retrieved by inputting the pack ID number.

According to the aforementioned invention, because the pack ID number is unique for at least a certain length of time, when referring to the electronic journal when processing returned products, by inputting the pack ID number instead of the receipt number, the transaction data including this pack ID number can be called up and displayed, and the process of searching the electronic journal is simplified.

In order to achieve the third object described above, the present invention provides a product pricing and registration system comprising a pricing device which prints an identification number (pack ID) identifying each product as a barcode on the price label when pricing products requiring weighing, and stores manufacturing data including the identification number (block ID) which identifies the raw material block of the product corresponding with this pack ID, and a registration device which when registering a product with the aforementioned pack ID, outputs the pack ID, or the block ID retrieved based on the pack ID, as receipt data.

In this case, it is preferable that the pack ID or the block ID is output as receipt data by either printing on receipt paper, writing to a recordable medium, transmitting by electronic mail, or transmitting by facsimile, or by any combination thereof.

According to the aforementioned invention, because the pack ID or the raw material block ID is output as receipt data (by for example printing on receipt paper), the raw material block unit from which the purchased product was manufactured is specified. Consequently, the customer can check the manufacturing channel information of the product when necessary, and thereby feel at ease.

Furthermore, the store can inform customers of the fact that the manufacturing channels of its products are known and are safe.

Furthermore, it is preferable that the aforementioned product pricing and registration system comprises a storage device which stores the manufacturing channel information of the raw material block unit which corresponds with the block ID, and a terminal device which, by inputting the aforementioned pack ID or the raw material block ID, retrieves and then either displays or prints the manufacturing channel information of the block ID retrieved on the basis of the block ID or the pack ID from the aforementioned storage device.

According to the aforementioned invention, the manufacturing channel information of a raw material block can be displayed or printed and then checked when necessary.

Furthermore, it is preferable that the aforementioned terminal device is installed in the store and can be operated by the customer.

According to the aforementioned invention, customers can operate the terminal in the store by themselves, and when they so desire, can either display or print and check the manufacturing channel information of the purchased product (raw material block).

Furthermore, it is preferable that the aforementioned storage device can be accessed from a personal computer connected to the internet, and that the manufacturing channel information of the block ID can be displayed on the display device of the personal computer by inputting the pack ID or the raw material block ID using browser software on the personal computer.

According to the aforementioned invention, customers can check the manufacturing channel information of a purchased product (raw material block) at any time, even when they are at home.

In addition, the present invention also provides a product pricing and registration system comprising a pricing device which, when pricing weighed products, prints an identification number (pack ID) identifying each product as a barcode on the price label, and stores manufacturing data including the identification number (block ID) which identifies the raw material block of the product corresponding with this pack ID, a manufacturing channel information storage device which stores the manufacturing channel information of the raw material block corresponding with the aforementioned block ID, and a registration device which, when registering the product referred to by the aforementioned pack ID, retrieves the aforementioned raw material block ID based on the pack ID, retrieves the manufacturing channel information based on the retrieved raw material block ID, and then prints the retrieved manufacturing channel information on a receipt.

According to the aforementioned invention, because the manufacturing channel information of the purchased product is printed on the receipt, the customer can check the manufacturing channel information of the purchased product at any time by looking at the receipt and can therefore feel at ease.

Furthermore, the store can inform customers of the fact that the manufacturing channels of its products are known and are safe.

In this case, it is preferable that the printing of manufacturing channel information on the receipt is only performed for those customers who request it.

According to the aforementioned invention, because manufacturing channel information is printed only for customers who request it, customers who are not interested in the manufacturing channel data are not issued with a lengthy receipt containing unnecessary data, and the issuing of receipts can be performed efficiently, without wasting receipt paper.

In order to achieve the fourth object described above, the present invention also provides a product discounting method which records an ID number, which can individually identify each product, on the price label in a machine readable manner, and stores manufacturing data linked with the ID number, including price data indicating the price of the product, in a storage device, wherein the ID number from the displayed product to be discounted is read using a terminal, and the discount data or the discounted price which was input into the terminal, and the ID number read from the product are sent from the terminal to an administration device and stored in the aforementioned storage device, and at the checkout, the ID number is read from the price label of the product, and if discount data or a discounted price linked with this ID number is stored in the aforementioned storage device, then the product is registered based on the discount data or discounted price.

According to the aforementioned invention, either the discount data or the discounted price of the product which has been input into the terminal, and the ID number read by the terminal are stored in the storage device, and at the checkout, if discount data or a discounted price corresponding with the ID number of the product is stored in the storage device, then the product is registered based on this discount data or discounted price, and consequently, when discounting a product, it is not necessary to issue barcode labels with the discounted price, and it is also not necessary to affix a barcode label showing the discounted price over the top of the original price label of the product.

In other words, because there is no need for an employee to move around the selling floor with a label printer issuing barcode labels with discounted prices, the operation involved in the product discounting process is easy and simple.

In addition, according to this invention, a determination is made as to whether or not discount data or a discounted price is stored in the storage device during product registration (at the checkout), and if such data is stored, then registration of the product is performed based on this discount data or discounted price, and consequently, the operator can execute the discounting process reliably, without performing any special operations.

In this case, it is preferable that displayed products which are discounted are labeled to indicate that they are discounted.

According to the aforementioned invention, because displayed products which are discounted are labeled as such, products which are discounted and products which are not discounted can be displayed together. Furthermore, according to this invention, because it is also clear for the customer whether or not a product is discounted, he/she can shop with considerable peace of mind.

Furthermore, it is preferable that when the aforementioned terminal reads the ID number of the displayed discounted product, the aforementioned discount data or discounted price can be input into the terminal.

Furthermore, the present invention also provides a product discounting system comprising a label issuing device which records an ID number, which can individually identify each product, on the price label in a machine readable manner, a storage device which stores manufacturing data linked with the ID number including price information indicating the price of the product, a terminal which reads the ID number from a displayed discounted product and transmits the discount data or discounted price which was input for the product, together with the ID number, an administration device which receives the ID number and the discount data or discounted price sent from the terminal and stores the discount data or discounted price linked with the ID number in the aforementioned storage device, and a product registration device which reads the ID number of a purchased product from the price label and, if discount data or a discounted price linked with the ID number is stored in the storage device, performs product registration based on the discount data or discounted price.

According to the aforementioned invention, the pricing process for weighed products is simplified by the label issuing device, and in addition, the operation involved in the discounting process for a variety of products including weighed products can be considerably simplified due to the functions of the storage device, the terminal, the administration device and the product registration device.

The above and other objects and features of the present invention will become more apparent from the following description taken in conjunction with the accompanying drawings.

BRIEF DESCRIPTION OF THE DRAWINGS

FIG. 1 is a layout of a selling floor of a store which sells perishable food or the like, showing a schematic illustration of a store which has implemented an administration method and system for manufacturing and selling perishable food products according to a first embodiment of the present invention.
FIG. 2 is a block diagram showing a system structure for describing the flow of data processing in the store.
FIG. 3 is an electrical configuration diagram of a weight label printer DPS according to the same embodiment
FIG. 4 is an electrical configuration diagram of a POS register PR according to the same embodiment.
FIG. 5 is a data configuration diagram of a PLU file used in the pricing process according to the same embodiment.
FIG. 6 is a flow chart showing an outline of the steps in a pricing process and totaling process according to the same embodiment.
FIG. 7 is a data configuration diagram of a raw material block file according to the same embodiment.
FIG. 8 is a diagram showing a display example of a price label according to the same embodiment.
FIG. 9 is diagram showing the structure of a barcode according to the same embodiment.

FIGs. 10A and 10B are diagrams showing the data configuration of a manufacturing performance file according to the same embodiment.

FIG. 11 is a flow chart showing the steps in a product registration / payment /totaling process according to the same embodiment.

FIG. 12 is a flow chart showing in detail the steps in the product registration process according to the same embodiment.

FIG. 13 is a diagram showing the data configuration of a discount file according to the same embodiment.

FIG. 14 is a diagram showing the data configuration of a sales performance file according to the same embodiment.

FIG. 15 is a diagram showing the totaled data for each raw material block ID according to the same embodiment.

FIG. 16A is a diagram showing changes in the purchasing, processing and sales processes for the block ID number #12 according to the same embodiment, FIG. 16B is a diagram showing the product loss for the block ID number #12, FIG. 16C is a diagram showing the calculation of the markup, gross margin and loss for the block ID number #12, FIG. D is a diagram showing a breakdown of the loss for the block ID number #12.

FIG. 17 is a diagram showing an example of an analysis of gross margins and loss for a raw material block unit, according to the same embodiment.

FIG. 18 is a diagram showing the barcode configuration according to a second embodiment of the present invention.

FIGs. 19A and 19B are diagrams showing the data configuration of a manufacturing performance file according to the same embodiment.

FIG. 20 is a flow chart showing the steps in a product registration process according to the same embodiment, performed by retrieving the manufacturing log in a manufacturing performance file.

FIG. 21 is a flow chart showing the steps in a product registration process according to the same embodiment, performed when the manufacturing log in the manufacturing performance file cannot be retrieved.

FIG. 22 is a diagram showing a schematic illustration of a store employing a perishable food product pricing and registration system according to a third embodiment of the present invention.

FIG. 23 is a block diagram showing the structure of the product pricing and registration system in order to show the flow of data processing in the store shown in FIG. 22.

FIG. 24 is an electrical configuration diagram of an information output terminal MT according to the same embodiment.

FIG. 25 is a data configuration diagram of a raw material block file according to the same embodiment.

FIGs. 26A and 26B are explanatory diagrams showing printed examples of receipts according to the same embodiment.

FIG. 27 is an explanatory diagram showing the data configuration of a manufacturing channel data file (SDF) according to the same embodiment.

FIG. 28 is an explanatory diagram showing the data configuration of a farm data file (BDF) according to the same embodiment.

FIG. 29 is an explanatory diagram showing a sample display of manufacturing channel data for a pack ID product displayed on a display according to the same embodiment.

FIG. 30 is an electrical configuration diagram of a handy terminal HT according to a fourth embodiment of the present invention.

FIG. 31 is a flow chart showing the steps in a discount process for clearance products, performed using the handy terminal HT according to the same embodiment.

FIG. 32 is a schematic drawing showing the external appearance of a clearance product.

FIG. 33 is a flow chart showing the steps in a product registration process, performed by retrieving the manufacturing log in a manufacturing performance file, according to the same embodiment.

## DETAILED DESCRIPTION OF THE PREFERRED EMBODIMENTS

The preferred embodiments of the present invention are described below with reference to the drawings.

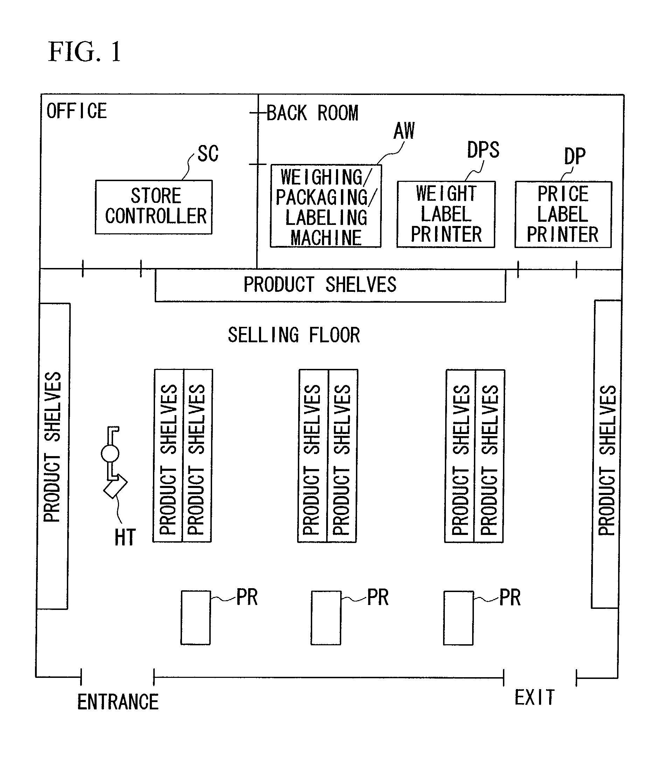

FIG. 1 is a layout of a selling floor of a store selling perishable food or the like, showing an example of a store which has implemented a method of processing manufacturing data and sales data for perishable foods according to a first embodiment of the present invention.

The back room on the upper right of FIG. 1 is an area where perishable foods are processed and priced, and in this area are placed pricing machines such as a weighing /packaging / pricing machine AW (label printer), a weight label printer DPS and a price label printer DP, and the price labels issued by these machines are affixed to the products as they are manufactured and processed. These labels and label printers are described below in greater detail.

The selling floor on the lower part of FIG. 1 is an area where shelves for displaying the products are placed, and POS registers PR comprising a barcode reader are provided at the checkout, and a customer pays for the products he/she purchases at one of these registers.

The office on the upper left of FIG. 1 is an area where business processes such as totaling data and accounting are performed, and where decisions are made, based on this data, regarding purchasing amounts and manufacture and processing amounts and the like, and a store controller SC is provided therein.

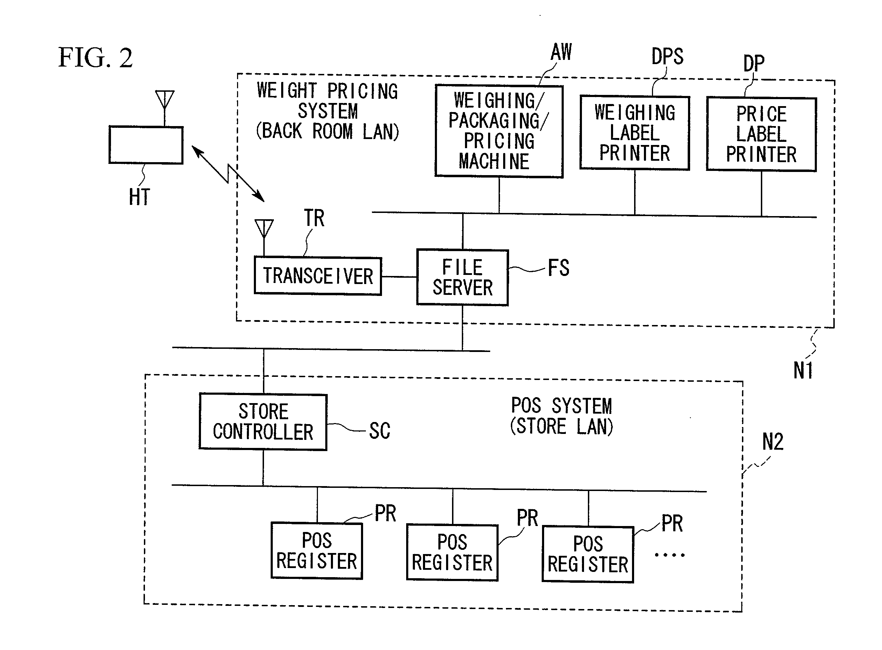

FIG. 2 is a block diagram showing the system configuration for describing the flow of the data processing in the store. A file server FS for storing a variety of data files is connected to the back room LAN (N1), in addition to the weighing / packaging / pricing machine AW (label printer), the weight label printer DPS and the price label printer DP, and this configuration constitutes the weight pricing system. Furthermore, a transceiver TR is attached to the file server FS, and data can be exchanged between the file server FS and a handy terminal HT carried by an employee via this transceiver TR. Moreover, this handy terminal HT has a barcode label printing and issuing function. Furthermore, the POS registers PR and the store controller SC are connected to a store LAN (N2). Furthermore, the back room LAN (N1) and the store LAN (N2) are connected to each other, and data can be exchanged between these two LANs.

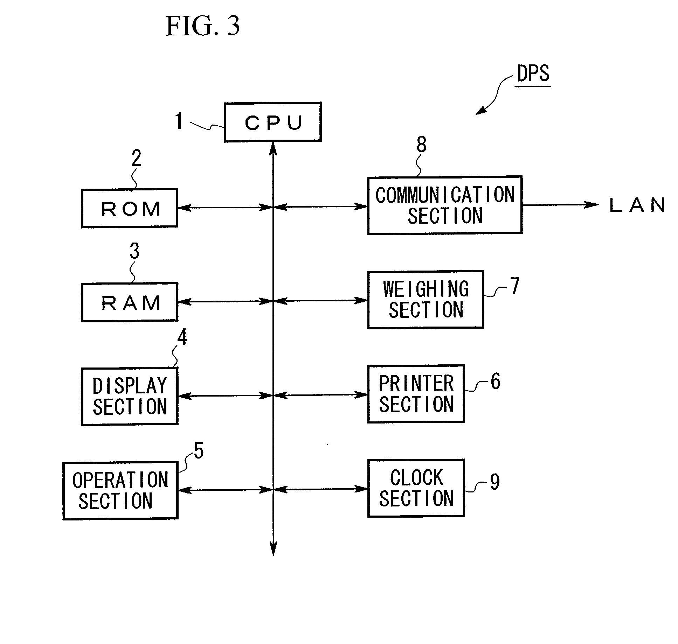

Next, the weight label printer DPS is described with reference to FIG. 3. FIG. 3 is an electrical configuration diagram for a weight label printer DPS. In this figure, label 1 indicates a CPU (central processing unit) which controls the entire operation of the weight label printer DPS, and this CPU 1 is connected to other structural elements, as shown in the figure. Label 2 indicates a ROM in which the programs executed by the CPU 1 are stored, and this ROM 2 contains the programs defining the processes of the CPU 1 in the operations described below. Label 3 indicates RAM (Random Access Memory) which is used in the arithmetic processing of the CPU 1, and a PLU file (product file) used in the pricing process described below is received from the aforementioned file server FS and stored in this RAM 3.

Label 4 indicates a display which displays predetermined information according to display instructions from the CPU 1. Label 5 indicates an operation panel provided with an input device for inputting items such as the product number of a product or the settings for a product file, and the input data is supplied to the CPU 1. Label 6 indicates a printer for printing a product name, price and barcode and the like on a label according to printing instructions from the CPU 1. Label 7 indicates a weighing section for calculating the weight of a product which is placed on a scale (not shown in the figure), and supplying the measured weight value to the CPU 1. Label 8 indicates a communication section for exchanging data with external sources by communicating via the LAN. Label 9 indicates a clock for determining the current month, date, hour and minute and supplying this information to the CPU 1.

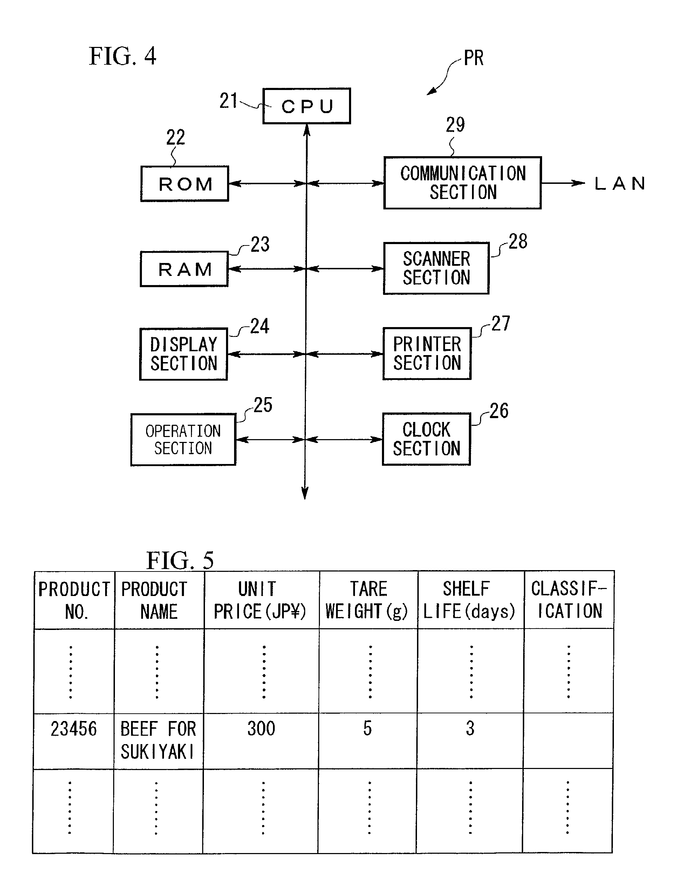

Next, a POS register PR is described with reference to FIG. 4.

FIG. 4 is an electrical configuration diagram showing a POS register PR according to the same embodiment. In this figure, label 21 indicates a CPU for controlling the entire operation of the POS register PR, which is connected to other structural elements, as shown in the figure. Label 22 indicates a ROM in which the programs executed by the CPU 21 are stored, and this ROM 22 contains the programs defining the processes of the CPU 21 in the operations described below. Label 23 indicates RAM (Random Access Memory), which is used in the arithmetic processing of the CPU 21.

Label 24 indicates a display for displaying predetermined information according to display instructions from the CPU 21. Label 25 indicates an operation panel which is provided with an input device for inputting information to indicate that product registration is completed or inputting numerical data such as the amount of money received from a customer when paying, and the input data is supplied to the CPU 21. Label 26 indicates a clock for determining the current month, date, hour and minute and supplying this information to the CPU 21. Label 27 indicates a printer for printing a receipt of the registered / paid for products and the like according to printing instructions from the CPU 21. Label 28 indicates a scanner for reading the barcode attached to a product and supplying the data to the CPU 21. Label 29 indicates a communication section for exchanging data with external sources by communicating via the LAN. For example, the communication section 29 downloads the aforementioned product data from the PLU file (product file) stored in the store controller SC for registration purposes, and conversely, also uploads sales data to the store controller SC.

Furthermore, the aforementioned PLU file which is used in the pricing process, the manufacturing performance file (the totaled file and the manufacturing log file) which is described below, and a raw material block file which is described below are all stored in a storage device (for example RAM) of the file server FS, although this storage device is not shown in the figure.

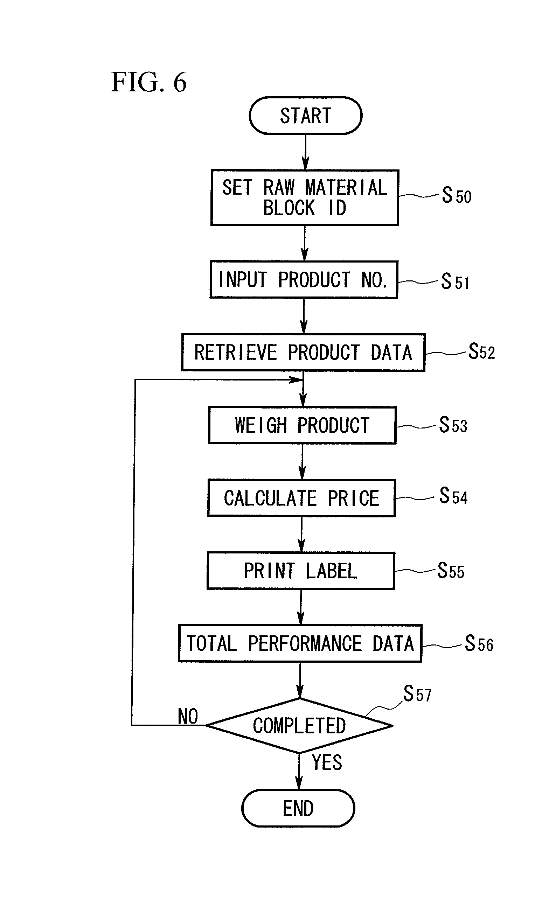

Here, FIG. 5 shows the data configuration of the PLU file used in the pricing process. As shown in the figure, pricing data such as the product name, unit price, tare weight and expiry date for each product number is stored in the PLU file.

Here, the unit price is the price of one product for fixed price products, and for weighed products is the price of 100 grams net. Furthermore, the tare weight is the weight of the packaging, such as the tray, in weighed products. This PLU file can be referred to or downloaded by the weighing / packaging / pricing machine AW, the weight label printer DPS, the label printer DP, the store controller SC, the POS registers PR and the handy terminal HT, as needed.

Furthermore, the details of the aforementioned manufacturing performance file are described below.

The operation of the product manufacturing data and sales data processing system according to the first embodiment of the present invention is described next.

The processes implemented by this system are separated into

(1) a product manufacturing and pricing process,
(2) a product registration / payment / sales data totaling process, and
(3) a manufacturing and sales data preparation and output process.

The respective processes are described below.

(1) Product Manufacturing and Pricing Process

This process comprises a pricing process wherein a product (for example "beef for sukiyaki" or "beef for steak") is manufactured and processed from a raw material block (for example a beef block) and a price label (barcode label) is issued for the manufactured and processed product and then affixed to the product, and a totaling process which totals the manufacturing and processing data (label issue data).

Moreover, the aforementioned price labels are issued for weighed products for which the weight is different for each product using either the weighing / packaging /pricing machine AW or the weight label printer DPS, and are issued for fixed price products using the price label printer DP.

FIG. 6 is a flow chart showing an outline of the steps of the pricing process and totaling process. A case where the pricing process is performed using the weight label printer DPS is described below.

Firstly, the person in charge of pricing inputs and sets the raw material block number (hereafter referred to as the block ID) which is a number which identifies and specifies the raw material block of the product to be priced (step S50 in FIG. 6).

The aforementioned block ID number (raw material block number) is an identification number assigned by the store for identifying a raw material block. In other words, when a raw material block arrives at the store, information such as the (1) date and time of arrival, (2) raw material block product name, (3) raw material block code, (4) price of purchase, (5) weight of purchase, (6) unit price of purchase, (7) supplier code, and (8) the code of person in charge are input for each block ID number using the weight label printer DPS. The (1) date and time of arrival is set automatically based on the clock data supplied by the clock 9 of the weight label printer DPS, and furthermore, (5) the weight of purchase is set automatically to the weight supplied by the weighing section, and (6) the unit price of purchase is calculated from the price of the purchase and the weight of the purchase.

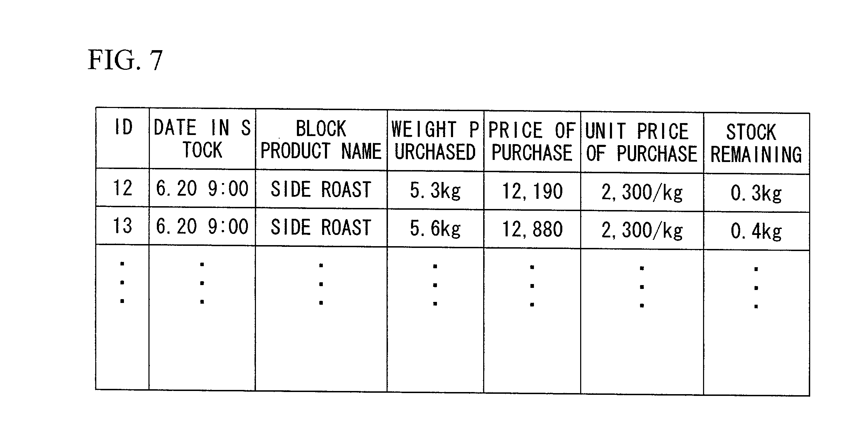

Moreover, after the aforementioned data is input, a block ID label, on which the block ID number, the block product name and the date and time of arrival and the like are printed, is printed and issued. The issued block ID label is attached to the raw material block and is used by the operator to identify the raw material block when a product is manufactured from the raw material block. Moreover, the data which is input for each block ID number is sent to the aforementioned file server FS and stored in the raw material block file in the file server FS (see FIG. 7).

At this time, an area (inventory field) where inventory data is stored is appended to each block ID number, and by subtracting the processed weight from the weight purchased, the inventory information is updated in real time for each block ID number.

In addition, when the person in charge of processing the products manufactures a product from a raw material block, by attaching an either hand written or printed raw materials slip to the butt or cart which is used to transport the product, the person in charge of pricing is notified of the aforementioned block ID number.

The person in charge of pricing checks the block ID number on the raw materials slip which is attached to the butt or the like of the product to be priced, and inputs this ID number using the operation panel.

Next, the person in charge of pricing inputs the product number of the product (step S51). The CPU 1 inside the weight label printer DSP then retrieves the product data such as product name, unit price and tare weight relating to this product number from the PLU file stored in the RAM 3 (step S52). Moreover, in the present embodiment, the PLU file stored in the RAM 3 is used, but the PLU file stored in the file server FS may also be used.

Next, when the person in charge of pricing places the manufactured and processed product on the scale, the weight label printer DSP weighs the product (step S53), and calculates the price of the product by multiplying the net weight, which is the tare weight subtracted from the measured weight, by the unit price (step S54). A price label is then issued on which is printed a barcode (pack ID barcode) which can individually identify the product and includes data on the date of processing, time of processing, and number sequence of the product, and on which is also printed other information (for example the product name, price, weight, expiry date, unit price and the like) (step S55). Moreover, the expiry date is determined by adding the shelf life of the product to the date and time of processing.

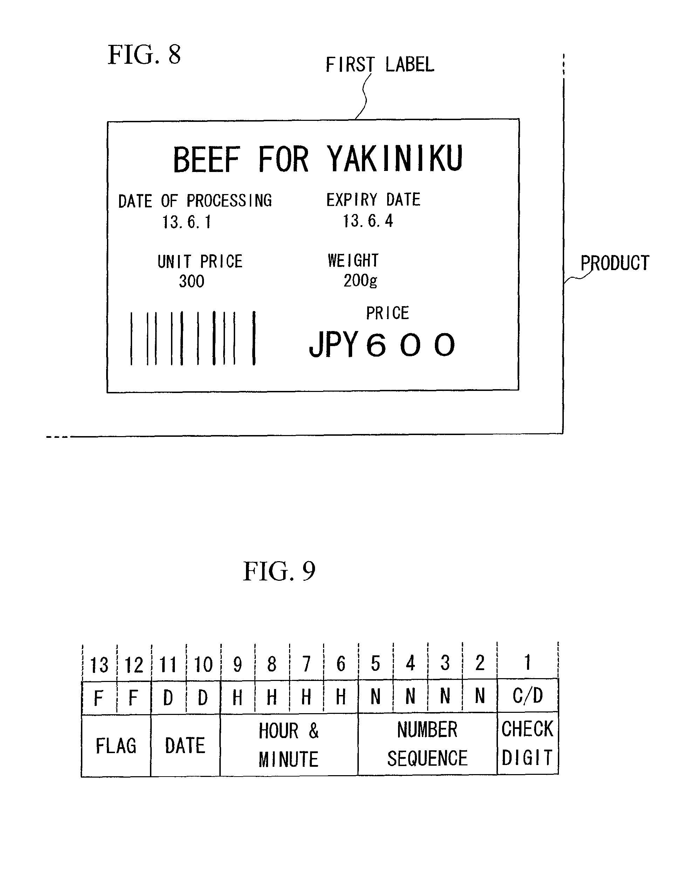

As shown in FIG. 8, a price label is issued in which a barcode which can individually identify each product and comprises information on the date of processing, time of processing, and number sequence of the product is displayed in the bottom left corner, and in other positions on the label are displayed predetermined pieces of information such as the product name, processing date, expiry date, unit price, weight and price. This price label can be affixed to the weighed product either automatically or by hand.

Subsequently, after the pricing process is completed by performing the aforementioned series of steps, information is written to the manufacturing performance file in the file server FS, based on the data provided on the issued price label (step S56). The manufacturing performance file is described below in detail.

Next, a determination is made as to whether or not there are products with the same product number that are still to be priced (step S57). If there are still products to be priced, the process from step S53 onward is repeated.

On the other hand, if it is determined that all the products with the same product number have been priced, then the pricing process for this particular product is finished, and the process is repeated from step S50 onward for another product.

Next, the composition of the aforementioned barcode is described with reference to FIG. 9. As shown in this figure, the pack ID barcode according to the present embodiment includes information on the date of processing, time of processing and the number sequence, and functions as an ID number which can individually identify each product.

This ID barcode comprises a flag "FF" comprising the first 2 digits of the barcode which indicates that the barcode is an in-store code and a pack ID barcode, a two digit manufacturing date code "DD" which specifies the processing date, a four digit hour/minute code "HHHH" which specifies the time of manufacture (processing), a four digit number sequence "NNNN", and a one digit check digit "C/D" for checking whether or not each digit of the barcode is read correctly.

Moreover, it is necessary to design the number sequence so that when the pricing operation is performed using a plurality of pricing devices simultaneously, the same ID number is not assigned more than once. For example, if the first digit of the number sequence is set to a number identifying the pricing device (machine number), then the same ID number can never be applied more than once. Furthermore, the assignment of the number sequence may also be administered by the file server FS.

By employing such a composition, because one ID number (pack ID number) is assigned for one product as a barcode, it is possible to individually identify each weighed product.

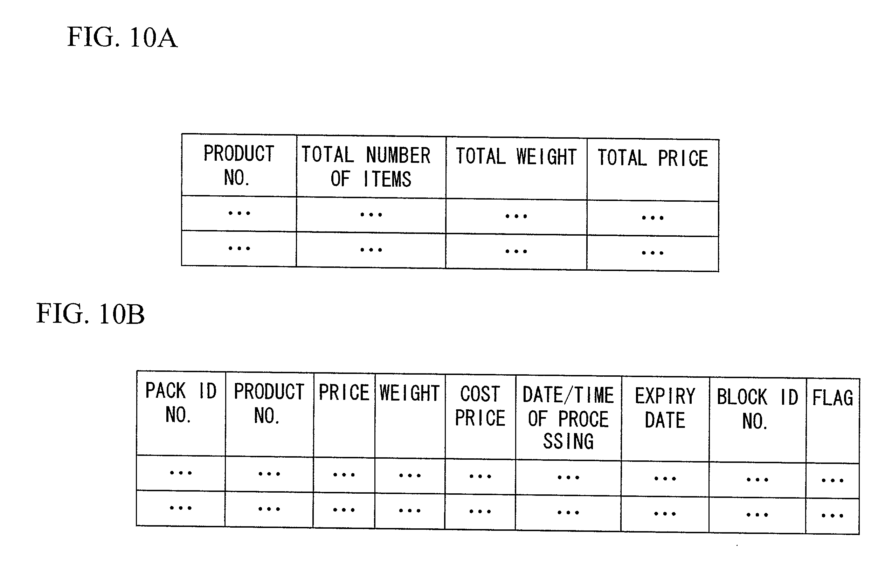

Next, the manufacturing performance file (totaling process) totaled in the totaling process is described below. FIGs. 10A and 10B show the data configuration of the manufacturing performance file. The manufacturing performance file comprises a first file (totaled file) in which the total number of items, total weight and total price are respectively stored for each product number shown in FIG. 10A, and a second file (manufacturing log file) in which individual manufacturing data such as the product number, price, weight, cost, date of processing, expiry date, block ID number and flag are respectively linked to each pack ID number shown in FIG. 10B.

Moreover, the number input in step S51 of the aforementioned pricing process is stored as the product number, and the block ID number set in step S50 of the same pricing process is stored as the block ID number. The flag indicates the sale status of the manufactured product, and is stored as "0" during pricing. Moreover, if the product is sold at the standard price the flag is changed to "1", if the product is sold at a discounted price the flag is changed to "2", and if the product is marked for disposal, the flag is changed to "3". By checking this flag, the status of the product following processing can be determined. Moreover, this process is described in greater detail below.

The manufacturing performance file (the totaled file and the manufacturing log file) is then sent to the store controller SC of the POS system via the LAN.

(2) Product Registration / Payment / Sales Data Totaling Process

The product registration / payment / sales data totaling process is described next.

This process is performed at a POS register PR for the products the customer has brought from the product shelves and wishes to purchase.

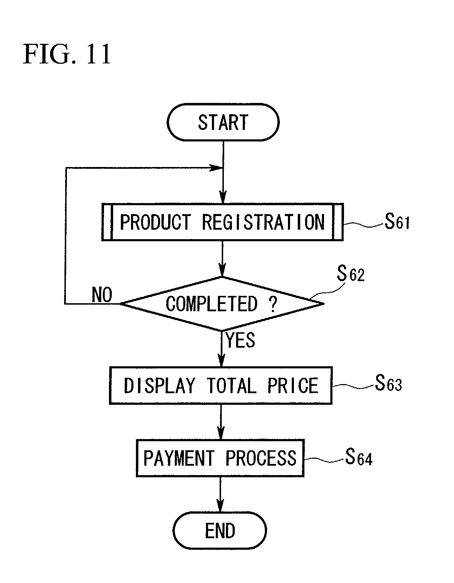

FIG. 11 is a flow chart showing the steps involved in the product registration /payment / sales data totaling process. In this figure, the product is first registered based on the data read from the barcode by the scanner 28 of the POS register PR (step S61, described in detail below), and this registration process is repeated until all products have been registered (step S62).

Next, the total cost of the registered products is displayed (step S63), and the payment process for these products is performed (step S64).

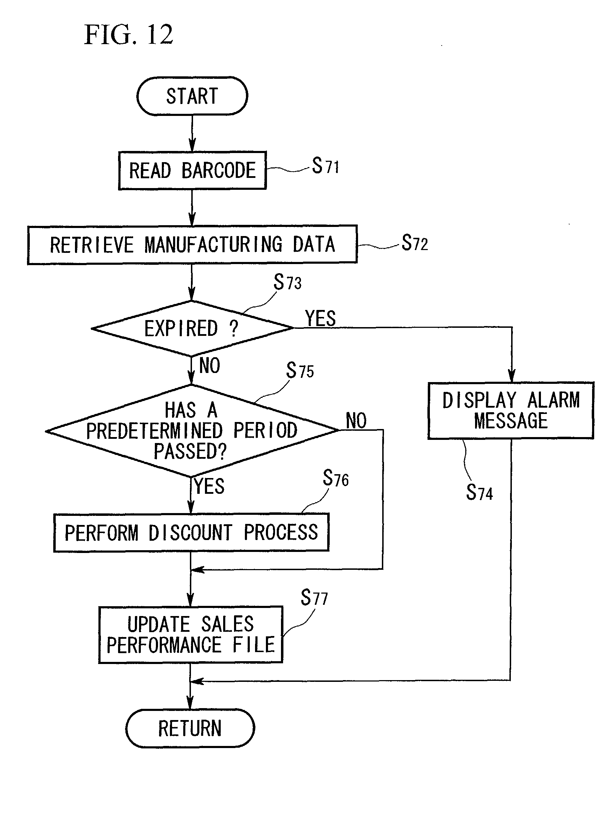

Next, the product registration process of step S61 for weight priced products according to the present invention is described in detail with reference to FIG. 12. Firstly, the barcode attached to the product, in other words the pack ID number (identification information) of the product, is read by the scanner 28 of the POS register PR (step S71). Once the pack ID number of the product is obtained, the manufacturing data including the product number and price and the like (see FIGs. 10A and 10B) corresponding with this ID number is retrieved from the manufacturing log file in the manufacturing performance file stored in the store controller SC, via the communication section (step S72).

Subsequently, a determination is made as to whether or not the product has expired, by referring to the expiry data read from the manufacturing log file (step S73). Moreover, this determination is made by referring to the date and time of the clock of the PR register.

If the product is determined to be past its expiry date, ("YES" in step S73), a warning is displayed to inform the operator of the POS register PR of this fact (step S74). Moreover, a warning sound may also sound at the same time as the warning is displayed.

On the other hand, if the product is determined to not be past its expiry date, ("NO" in step S73), a determination is made as to whether or not an amount of time exceeding a predetermined amount of time (predetermined period) has passed since the product was processed, based on the data on the date and time of processing included in the pack ID number read in step S71, and the time of the clock 26 of the POS register PR. If a predetermined length of time has passed, then a discounting process is performed (step S76). In other words, the discounted price is calculated based on the discount file stored in the store controller SC.

Product registration is then performed based on the product number and price read from the manufacturing log file, or the discounted price, and the registration data is sent to the store controller SC. The sales performance file of the store controller SC is then updated, and the flag for the product is changed in the manufacturing log file (step S77). Moreover, the registration data sent to the store controller SC is the product number and the price in the case of a non-discounted product, and the product number, the price and the discounted price in the case of a discounted product.

Moreover, this flag is changed to "1" for a product which was sold at the normal price without a discount, and changed to "2" for a product which was sold at a discount. When the flag is changed to "2", in other words when the product is sold at a discount, the discounted price is also stored, linked with the pack ID number.

Moreover, the aforementioned predetermined amount of time (predetermined term) and the amount of the discount (discount rate) are already set for each product in a discount file.

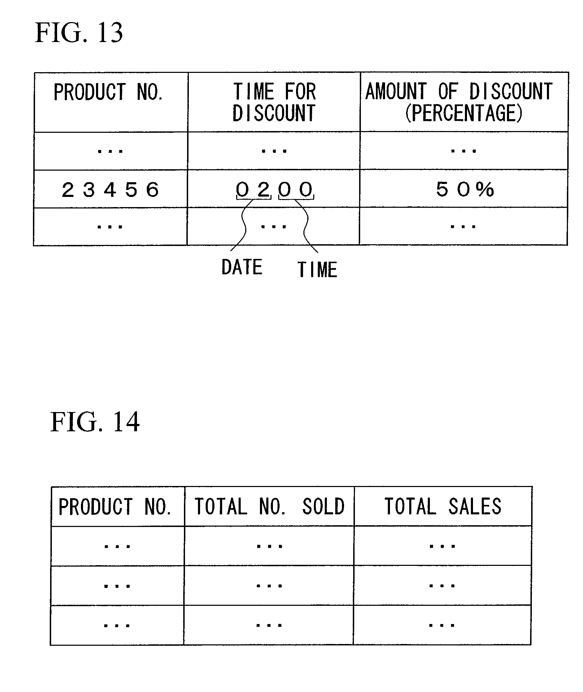

FIG. 13 shows the data configuration of the discount file. As shown in the figure, the discount time, in other words the time elapsed since the product was processed, and the amount of the discount (discount rate) are linked to each product number. The discount file shown in FIG. 13 for the product number 23456 is set so that the product is discounted by 50% after two days have elapsed from the time of processing.

Moreover, the discount time is displayed as four digits, wherein the first two digits represent the date and the following two digits indicate the time.

For example, if the discount time is set to "0112", the discount takes effect after one day and twelve hours, and furthermore, if the discount time is set to "0004", the discount takes effect after four hours. Moreover, this discount file is stored in the store controller SC and the file server FS.

Furthermore, as shown in FIG. 14, the aforementioned sales performance file comprises a file (totaled file) containing data on the total number sold and total value of sales for each product number.

Moreover, when a product is marked for disposal, the flag of the product is changed to "3" in the manufacturing log file.

Furthermore, the marking of a product for disposal can be performed during the process of step 73 described above, or by an employee scanning the pack ID number of a product which has expired using the handy terminal HT on the selling floor.

(3) Manufacturing and Sales Data Preparation and Output Process

This process is performed as required using a device connected to the store controller or the LAN by cable or wireless means, and the prepared results are displayed on a display and output as a printout according to need.

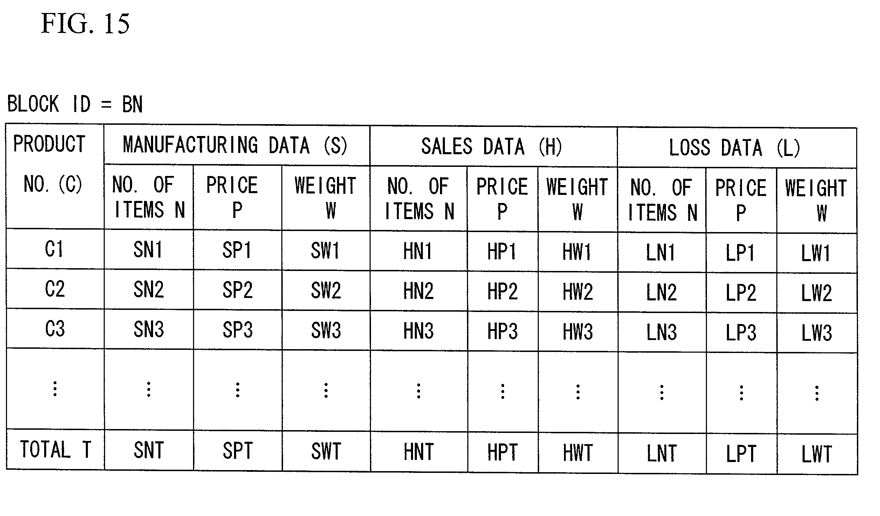

Because the block ID for each pack ID and a flag indicating the sale status is stored in the manufacturing log file, by extracting and totaling data based on the block ID number, a variety of totaled data such as the data shown in FIG. 15 can be acquired for any block ID number.

From this totaled data, the type of information listed below can be acquired for any block ID number.

(1) Manufacturing data, sales data and loss data for each product number, and in total
(2) Inventory data for each product number, and in total

Inventory data (Z) = manufacturing data (S) - sales data (H)

Moreover, the inventory data relating to inventory which has expired is the theoretical loss data.
(3) Sales rate and loss rate for each product number, and in total

Sales rate = sales data / manufacturing data x 100 (%)

$$\text{Loss rate} = \text{loss data} / \text{manufacturing data} \times 100 \, (\%)$$

(4) Gross margin (gross margin for purchased raw material block)

$$\text{Gross margin} = \text{total value of sales (HPT)} - \text{purchase cost for the block ID number}$$

Moreover, the purchase cost for the block ID number in the above formula is stored in the aforementioned raw material block file.

Furthermore, products for which the flag is "0" after the disposal data has been input are considered lost due to shoplifting or the like, and product loss data can also be totaled for any block ID number.

Furthermore, because data on the date and time of processing is stored in the manufacturing log file for each pack ID, various data can be totaled based on dates and times of processing, and the actual inventory, margins and loss in every process from purchasing to sale can be ascertained.

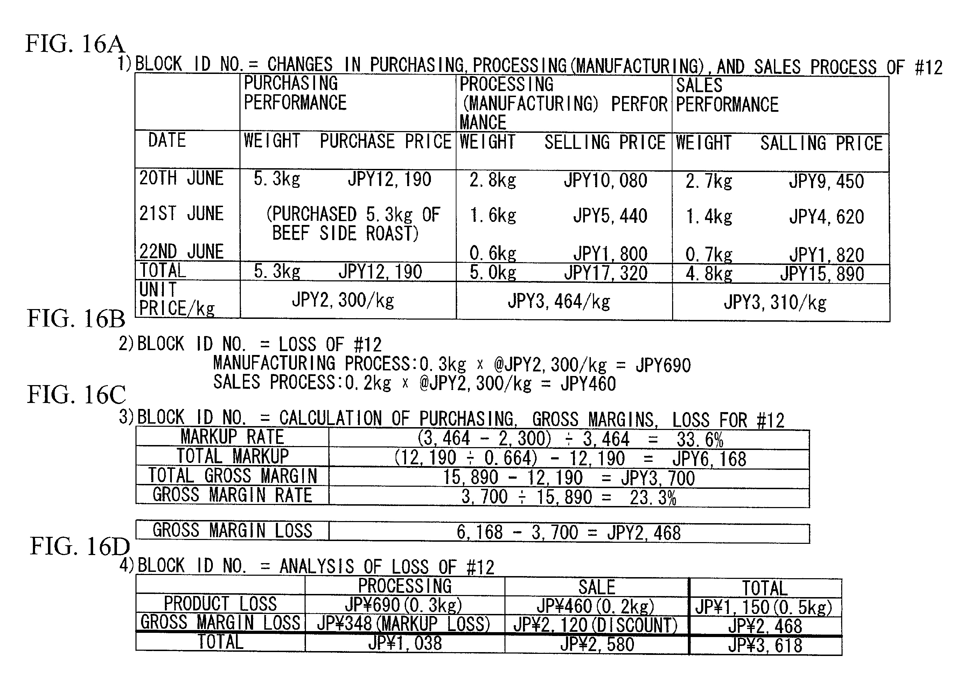

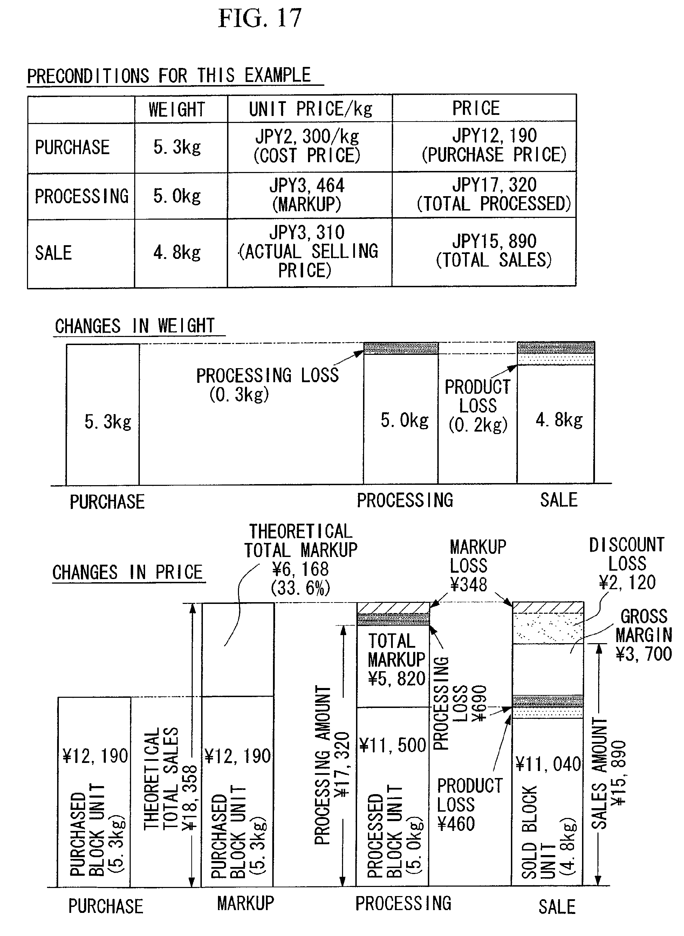

FIG. 16 illustrates a case where 5.3 kg of beef side roast (block ID number = #12, weight purchased 5.3 kg, purchase price ¥ 12,190) was purchased, and the entire amount was sold during the period of time from the 20th to the 22nd of June. Furthermore, FIG. 17 shows a sample analysis of the gross margin and loss for the block used as an example in FIG. 16.

Moreover, FIG. 16A indicates the changes during the purchasing, processing (manufacturing), and sales processes for the block ID number 12, FIG. 16B shows the product loss for the block ID number 12, FIG. 16 C shows the calculation of the markup, gross margin and loss for the block ID number 12, and FIG. 16 D shows a loss analysis for the block ID number 12.

Moreover, the items in FIGs. 16A to 16D are calculated using the following formulas.

$$\text{Markup rate} = (\text{unit price of manufactured products} - \text{unit price of purchased}$$

$$\text{product}) / \text{unit price of manufactured products} \times 100 \, (\%)$$

$$\text{Total markup} = \text{purchase price} / (1 - \text{markup rate}) - \text{purchase price}$$

$$\text{Total gross margin} = \text{total sale price} - \text{purchase price}$$

$$\text{Gross margin rate} = \text{total gross margin} / \text{total sale price}$$

$$\text{Loss} = \text{total markup} - \text{total gross margin}$$

As described above, according to the manufacturing data and sales data processing method of the present embodiment,

(1) it is possible to individually manage manufacturing data for each perishable food product,
(2) it is possible to automate the discounting process,
(3) it is possible to prevent expired products from being inadvertently sold
(4) because flags indicating the manufacturing data, block ID number and sale status for each pack ID number are stored in the manufacturing log file, it is possible for manufacturing data, sales data and loss data to be totaled for each block ID number, and for inventory control, loss management and gross margin management to be performed for each block ID number, and consequently, it is possible to clearly identify the loss in every process from purchasing to sale, and
(5) furthermore, because data on the date and time of manufacture is stored in the manufacturing log file for each pack ID number, a variety of data can be totaled for a given manufacturing period.

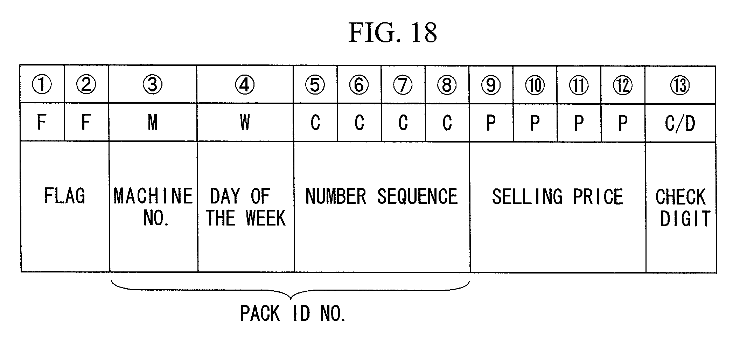

Next, a second embodiment of the present invention is described with reference to FIG. 18 through FIG. 21.

This second embodiment relates to a pricing and registration processing method for perishable foods, and the general layout of a store in which the present embodiment is employed, and the flow of the data processing in the store, is the same as that shown in FIG. 1 and FIG. 2. Furthermore, the weight label printer DPS and the POS registers PR can have the same electrical configuration, functions and operation as those in the first embodiment, and the data configuration of the PLU file and the manufacturing performance file can also be the same as in the first embodiment. Consequently, those members and elements which were also present in the first embodiment are labeled with the same labels, and the descriptions thereof are omitted.

The operation of the product pricing and registration process according to the present embodiment are described below.

Moreover, the processes implemented by the present system are separated into

(1) a product manufacturing and pricing process,
(2) a product registration / payment / sales data totaling process, and
(3) a manufacturing and sales data preparation and output process.

However, because the product manufacturing and pricing process (1) is performed according to the steps in FIG. 6. in the same manner as in the first embodiment, the product registration / payment / sales data totaling process (2) is performed according to the steps in FIG. 11, and the manufacturing and sales data preparation and output process (3) is also performed in the same manner as in the first embodiment, the descriptions thereof are omitted.

A barcode (pack ID barcode) which can individually identify each product is included in the particulars printed on the price label issued in the above product manufacturing and pricing process (1) (step S55). As follows, the composition of this barcode according to the present embodiment is described with reference to FIG. 18.

As shown in FIG. 18, the pack ID barcode according to the present embodiment is a 13 digit one dimensional JAN barcode, wherein the first two digits (1), (2) represent a flag, the third digit (3) represents a machine number, the fourth digit (4) represents the day of the week, the digits from (5) to (8) are a number sequence, the digits from (9) to (12) represent the selling price, and the thirteenth digit (13) is a check digit.

In general, the flag "FF" can be set to any number from 01 to 99, but in the case of a pack ID barcode, a number which is neither a country code used in a standard PLU barcode, such as "49", nor a flag used in an ordinary NON-PLU barcode, is used. In other words, a number is used which is not already a flag used in the store.

Furthermore, this flag data shows that the barcode is a pack ID barcode, and also shows the classification of the product. For example, the numbers "03" to "07" could be used as the flags of a pack ID barcode, and defined so that "fresh meat" is indicated by the flag "03", "fresh fish" is indicated by the flag "04", "vegetables and fruits" are indicated by the flag "05", "daily dishes" are indicated by the flag "06", and "other products" are indicated by the flag "07". Moreover, this product classification could also be set to include "beef", "pork", "chicken" and "other meats", by increasing the number of flags.

Furthermore, this product classification is preset for each product number in the product file used for pricing (see FIG. 5).

The machine number (M) shows the machine number of the machine which printed and issued the barcode label for the pack ID number, where "1" through "8" indicate a specific pricing device, and "9" indicates the handy terminal HT.

The day of the week "W" indicates the day of the week on which the barcode label was printed and issued. "0" indicates Sunday, "1" indicates Monday, and ... "6" indicates Saturday.

The number sequence "CCCC" is a number from "0001" to "9999". The machines which issue each barcode label (the pricing devices and the handy terminal HT) respectively generate and administer the number sequence.

The sale price "PPPP" is a value from "0" to "9999" which indicates the sale price of the product. If the sale price "PPPP" is "0", this means that the price of the product is more than four digits long, and can therefore not be displayed in four digits. Normally, it is very rare for the price of perishable foods to be five figures or more, but because it is possible that such expensive items may be sold in special cases such as special end of year or new year sales, for such products the price printed on the price label can be keyed in during product registration.

The check digit "C/D" is data for checking whether or not a barcode has been read correctly.

The numerical value of the six digits from the third to the eighth digit in the aforementioned barcode function as an ID number (pack ID number) for individually identifying weighed products.

By employing such a configuration, because one ID number (pack ID number) is assigned for one weighed product as a barcode, it is possible to individually identify each weighed product. Furthermore, sale price data is also included in each barcode.

(2) Product Registration / Payment / Sales Data Totaling Process

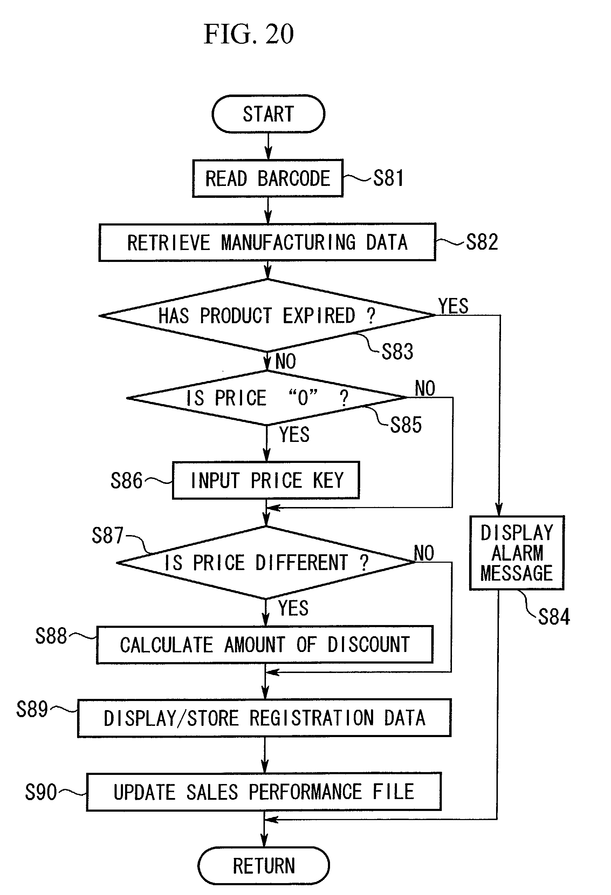

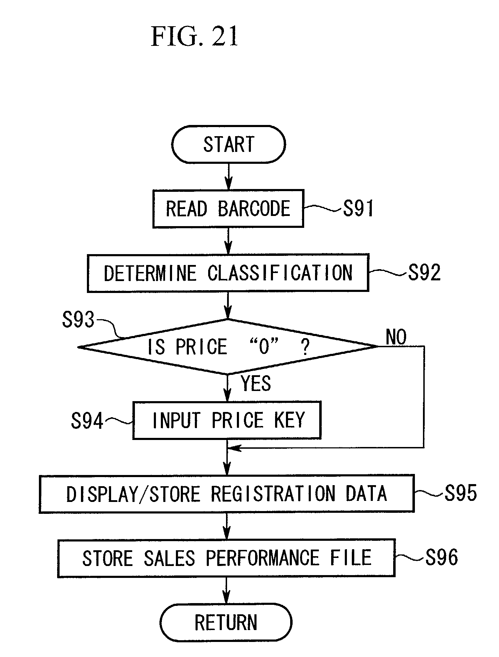

The product registration / payment / sales data totaling process according to the present embodiment is performed according to the steps shown in FIG. 11, in the same manner as in the first embodiment, but the steps involved in the process of registering a product (step S61) based on the data read from a barcode by the scanner 28 of the POS register PR are described in detail with reference to FIG. 20 and FIG. 21.

FIG. 20 shows the product registration process performed by reading from the manufacturing log in the manufacturing performance file stored in the store controller SC. FIG. 21 shows the product registration process performed when the manufacturing log data cannot be read due to reasons such as the store controller SC being down. In FIG. 20, firstly the barcode attached to the product, in other words the pack ID number (identification information) and price of the product, is read by the scanner 28 of the POS register PR (step S81). Subsequently, once the pack ID number of the product is obtained, manufacturing data (see FIG. 18) corresponding with this ID number such as the product number and price of the product is retrieved from the manufacturing log file in the manufacturing performance file stored in the store controller SC, via the communication section (step S82).

Next, by referring to the expiry date data retrieved from the manufacturing log file, a determination is made as to whether or not a product has expired (step S83). Moreover, this determination is made by referring to the date and time of the clock of the POS register PR.

If the product is determined to have expired ("YES" in step S83), a warning is displayed to inform the operator of the POS register PR of this fact. Moreover, a warning sound may also sound at the same time as the warning is displayed.

On the other hand, if at step S83 the product is determined to have not expired ("NO" in step S83), then a determination is made as to whether or not the price data included in the barcode read in step S81 is "0" (step S85). In the case where the price data is "0" ("YES" in step S85), the price consists of five or more digits and cannot be displayed using only four numerical values, so the operator is requested to key in the price printed on the price label, and the process waits in standby mode until the price data is entered (step S86).

When the determination at step S85 is "NO", or when the price is entered in step S86, a determination is made as to whether or not the price P read from the barcode in step S81, or alternatively the price P input in step S86, differs from the price $P_0$ in the manufacturing log data read in step S82 (step S87). If the prices are different ("YES" in step S87) a discount process in which a label with a different price has been affixed to the product has been performed, and the amount of the discount is calculated by subtracting the price P of the barcode from the price $P_0$ read from the manufacturing log (step S88).

Subsequently in step S89, the registration data, for example the product name, price, amount of discount (if the product is discounted), and the weight and the like, is displayed, and also stored in the receipt buffer.

In step S90, the sales performance file and the manufacturing performance file are then updated for the registered product. In other words, the registration data is sent to the store controller SC and the manufacturing performance file in the store controller SC is updated, while the flag for the product is changed in the manufacturing log file. Moreover, the registration data which is sent to the store controller SC is, in the case of a non-discounted product, the product number and price, and in the case of a discounted product is the product number, the price and the amount of the discount.

The process shown in FIG. 20 is performed in the manner described above in those cases in which the manufacturing log data stored in the store controller SC is able to be read and processed during product registration, but the steps involved in the product registration process in those cases in which the manufacturing log data cannot be read, for such reasons as the store controller SC being down or there being problems with the LAN, are described in detail below with reference to FIG. 21.

Firstly, the barcode attached to the product, in other words the pack ID number (identification information) and price of the product, is read by the scanner 28 of the POS register PR (step S91). The classification of the product is determined from the flag comprising the first two digits of the read barcode, and a classification name is called up (step S92). Moreover, each POS register PR comprises a classification name file in which the classification names corresponding with the classifications (codes) are stored, and the classification name is called up using this file.

Subsequently, a determination is made as to whether or not the price data of the barcode read in step S91 is "0" (step S93). In a case where the price data is "0" ("YES" in step S93), the price consists of five or more digits and cannot be displayed using only four numerical values, so the operator is requested to key in the price printed on the price label, and the process waits in standby mode until the price data is entered (step S94).

When the determination at step S93 is "NO", or when the price is entered in step S94, the registration data, for example the classification name and the price, is displayed, and also stored in the receipt buffer (step S95).

Subsequently, in step S96, the barcode data (pack ID number and price) of the registered product is stored in the memory of the POS register PR as sales performance data.

Moreover, if communication is possible with the store controller SC, the sales performance data stored in the memory of the POS register PR is sent to the store controller SC, and the sales performance file and the manufacturing log data in the store controller SC are updated respectively.

(3) Manufacturing and Sales Data Preparation and Output Process

This process is performed in the same manner as in the first embodiment.

As described above, according to the manufacturing and sales data processing method of the present embodiment,

(1) because the product classification and the price are included in the barcode in addition to the pack ID number, the checkout process can be performed based on the read barcode without referring to the manufacturing log data, and in such a case, the classification name of the classification of the product can be displayed and printed.

(2) because the price data is included in the barcode, by affixing a barcode with changed price information over the old barcode, discounting can be performed in the same manner as with conventional NON-PLU barcodes, and if a product is discounted, the amount of the discount can be displayed or printed.

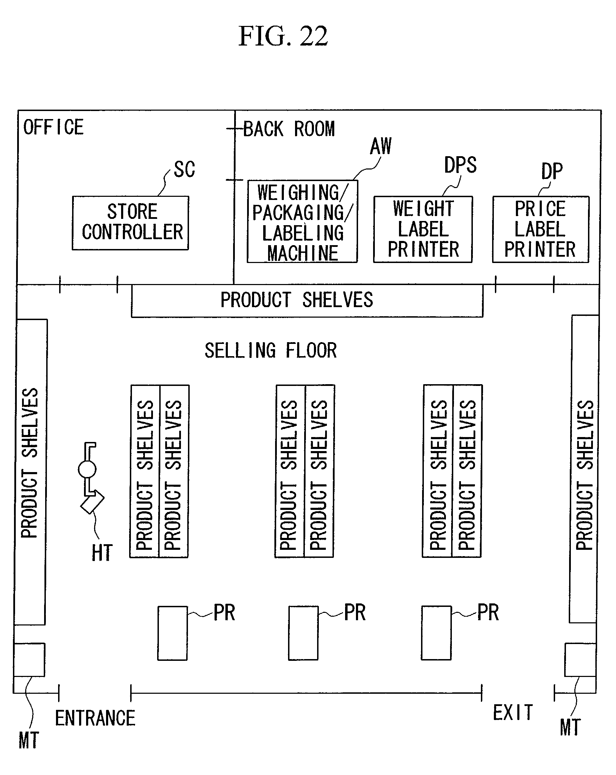

Next, a third embodiment of the present invention is described with reference to FIG. 22 through FIG. 29. This third embodiment relates to a pricing and registration system for perishable foods. Moreover, those members and elements which are also present in the first and second embodiments are labeled with the same labels, and the descriptions thereof are omitted.

FIG. 22 is a store layout diagram showing a store selling perishable food products, and corresponds with FIG. 1 described in the first embodiment. FIG. 22 differs from FIG. 1 in that information output terminals MT which display the manufacturing channel information and the like for perishable foods are provided near the entrance and exit. These information output terminals MT are described below in detail.

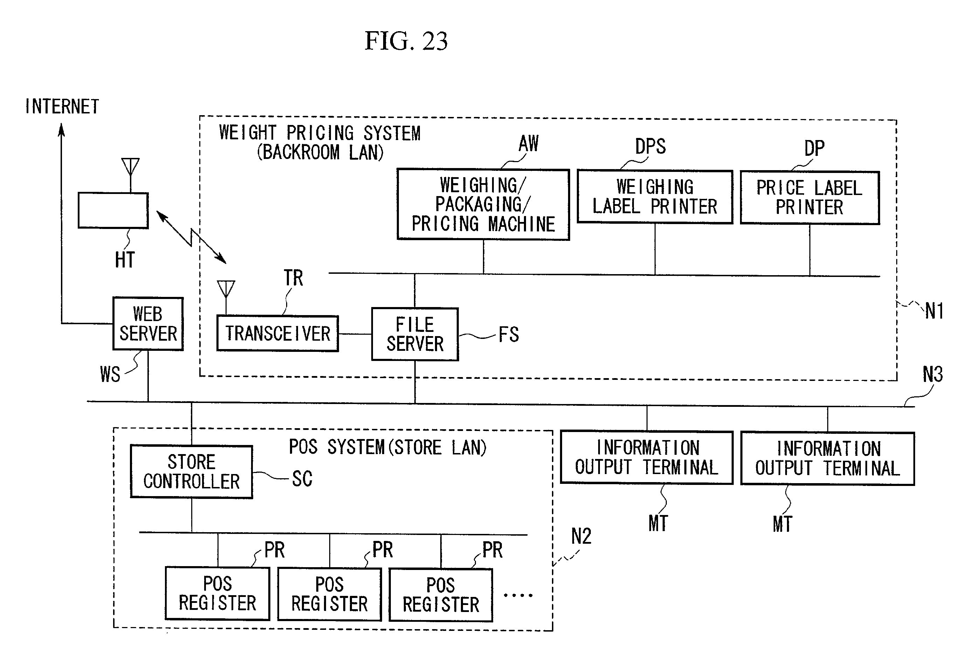

FIG. 23 is a block diagram showing the system configuration for describing the flow of the data processing in the store according to the present embodiment, and corresponds with FIG. 2 described in the first embodiment. FIG. 23 differs from FIG. 2 in that an aforementioned information output terminal MT is connected to a local LAN (N3) which connects the back room LAN (N1) and the store LAN (N2), and the various data stored in the file server FS and the store controller SC can be displayed and printed as needed.

Furthermore, a web server WS which is connected to the internet is connected to the local LAN (N3), and this web server WS is configured so that it is possible to upload various data to external devices via the internet as needed, and also download necessary data from external devices as required.

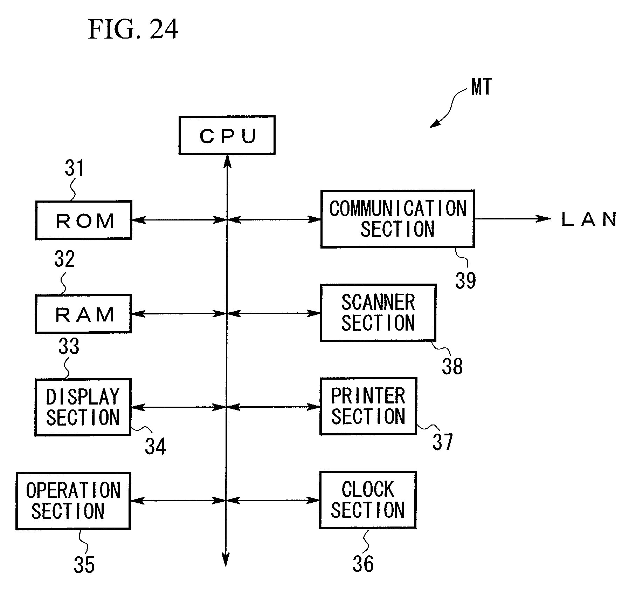

Next, the information output terminal MT is described with reference to FIG. 24. FIG. 24 is an electrical configuration diagram showing the information output terminal MT. The structural elements are almost identical to the POS register PR (see FIG. 4). In other words, in FIG. 24, label 31 indicates a CPU for controlling the entire operation of the information output terminal MT, and as shown in the figure, the other structural elements are connected respectively to this CPU.

Label 32 indicates a ROM in which programs executed by the CPU 31 are stored, and label 33 indicates a RAM which is used in the arithmetic processing of the CPU 31.

Label 34 indicates a display for displaying predetermined information according to display instructions from the CPU 31. Label 35 indicates an operation panel comprising an input device for inputting numerical data such as a pack ID number or a raw material block ID number described below, and supplying the input data to the CPU 31.

Label 36 indicates a clock for determining the current day, hour, minute and second and supplying this information to the CPU 31. Label 37 indicates a printer for printing the manufacturing channel information described below according to instructions from the CPU 31.

Label 38 indicates a scanner for reading the barcode attached to a product and supplying the read data to the CPU 31. Label 39 indicates a communication section for exchanging data with external devices by communicating via the LAN. The communication section 39 is used when, for example, retrieving and displaying the various files stored in the file server FS and the store controller SC and the like.

Moreover, the PLU file used in the pricing process, the payment performance file and the raw material block file are stored in a memory device (for example RAM) provided in the file server FS (not shown in the figure) in the same manner as in the first and the second embodiment, but in the present embodiment, a manufacturing channel information file is also stored in the memory device.

Next, the operation of the product pricing and registration process according to the present embodiment is described.

Moreover, the processes implemented by the present system are separated into

(1) a product manufacturing and pricing process,
(2) a clearance product discounting process,
(3) a product registration / payment / sales data totaling process,
(4) a manufacturing and sales data preparation and output process, and

(5) a manufacturing channel information output process.

However, the processes (1) to (4) are, unless specifically noted, essentially the same as in the first and the second embodiment, and the descriptions thereof are therefore omitted.

Moreover, as described in the first and second embodiment, the above product manufacturing and pricing process (1) comprises a pricing process in which a price label (barcode label) is issued for a product manufactured from a raw material block and subsequently attached to the product, and a totaling process in which manufacturing data (label issuing data) is totaled, although in this embodiment, the raw material block number (the block ID number) input and set by the person in charge of pricing at step S50 of FIG. 6, which shows an outline of the steps of the pricing and totaling processes, includes not only the date and time of purchase, the raw material block product name, and the raw material block code and the like, but also includes an individual identification code according to the present embodiment.

The individual identification code is a code for identifying the actual source from which a raw material block was manufactured. For example, if the raw material block is beef, this code is an identification code (cow number) assigned individually to each beef cow. This identification number (cow number) is entered on the shipping ticket of the raw material block at the meat processing plant and is then sent to the store with the raw material block.

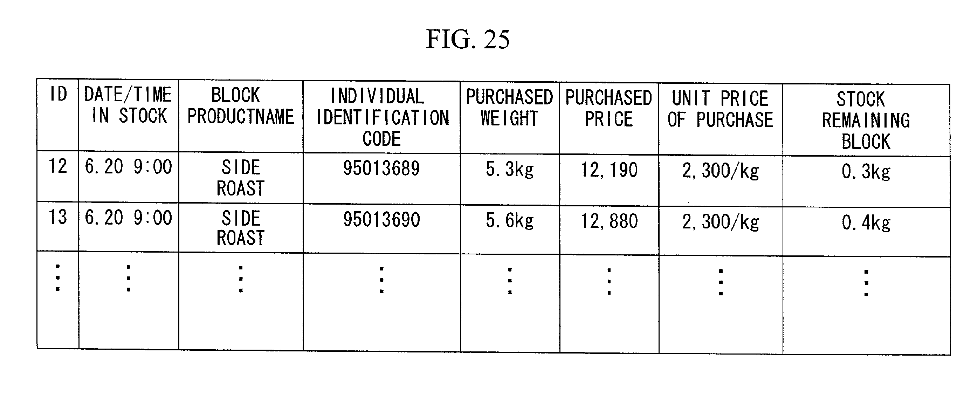

Consequently, the individual identification code is included in the data which is entered for each block ID number, sent to the file server FS, and stored in the raw material block file in the file server FS (see FIG. 25).

Moreover, in the aforementioned totaling process (1), the raw material block file is sent with the totaled manufacturing performance file (the totaled file and the manufacturing log file) to the store controller SC of the POS system via the LAN.

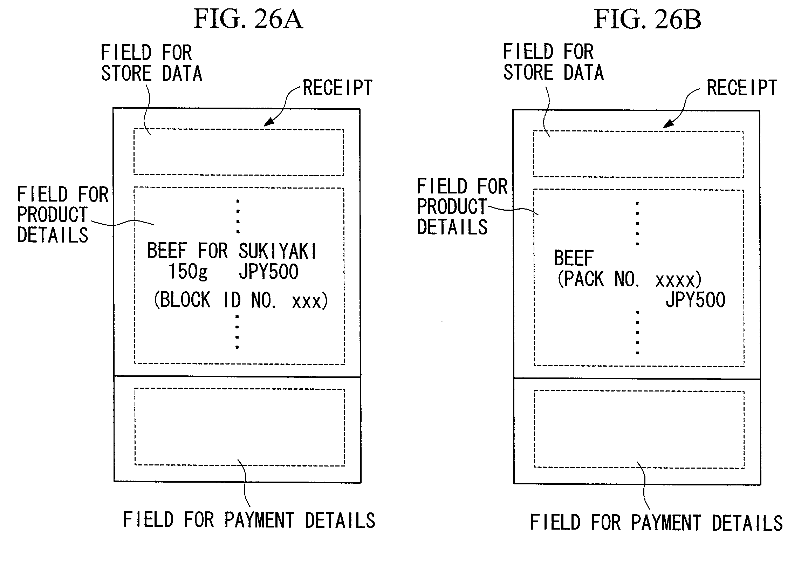

As described above, the aforementioned product registration / payment / sales data totaling process (3) is performed according to the steps shown in FIG. 11, in the same manner as in the first and second embodiment, and in the payment process (step S64) in the same figure, a receipt on which are printed the purchase details of the product and payment data is printed by the printer 27 and passed to the customer with his/her change, but in the present embodiment, if a pack ID product (a product to which a pack ID is assigned) is registered, then the block ID number of the pack ID product is printed in the field for product details on the receipt, together with the product name and price of the product (see FIG. 26A). Moreover, if when registering a product in the manner described below, the manufacturing log data is unable to be retrieved, the pack ID number is printed in the field for product details on the receipt, together with the classification name and price and the like of the pack ID product (FIG. 26B).

Moreover, the product registration / payment / sales data totaling process in the present embodiment is performed according to the steps shown in FIG. 11, in the same manner as the first embodiment, but the steps involved in the process of registering a product based on the data read from the barcode by the scanner 28 of the POS register PR (step S61) are the same as in the second embodiment (see FIG. 20, FIG. 21).

The aforementioned manufacturing and sales data preparation and output process (4) is performed in the same manner as in the first and second embodiments.

(5) Manufacturing Channel Information Output Process

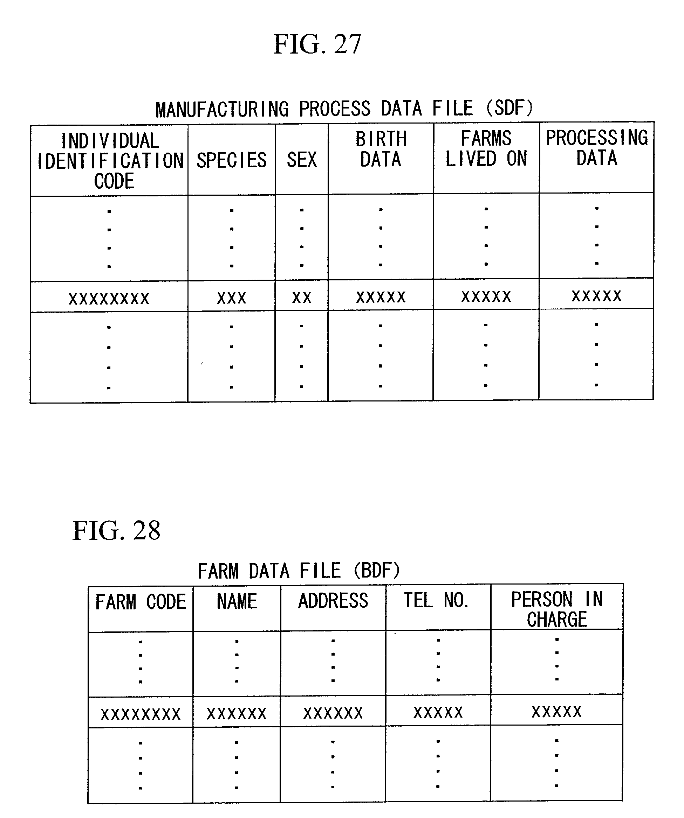

Next, the manufacturing channel information output process is described. In this process, a customer can use an information output terminal MT installed in the store to display or print the manufacturing channel information for the product (pack ID product) he/she has bought or wishes to buy. In other words, as shown in FIG. 27 and FIG. 28, the memory devices of the store controller SC and the file server FS are used to store a manufacturing channel data file (SDF) which contains manufacturing channel information such as the (1) species, (2) sex, (3) date of birth, (4) farm of birth (code), (5) ID code of sire, (6) ID code of birth cow, (7) farm (code) at which animal was raised, and for how long, (8) meat processing plant, and (9) the date of processing and the like of the meat source (meat cow) for each individual identification code (cow number), together with a farm data file (BDF) which contains the farm name (processing plant name), address, telephone number, and name of the person in charge and the like for each farm code or processing plant code.

The data in these data files SDF and SBF may be made into a database in the store, but by establishing an individual identification code administration center for the entire industry, gathering and managing each piece of data at the administration center as a database, and then not performing any transaction involving a beef cow for which data is not present in the administration center, the gathering and administration of data can be kept accurate and reliable. Furthermore, if needed, the manufacturing channel data file (SDF) and the farm data file (BDF) can be downloaded from the administration center via the internet, and stored in the memory devices of the store controller SC and the file server FS.

When a customer wants to know the manufacturing channel information for a pack ID product which he/she has purchased, he/she inputs the raw material block ID number or the pack ID number printed on the receipt into the operation panel 35 of the information output terminal MT.

Furthermore, in a case where the purchased product is at hand, or if a customer wants to know the manufacturing channel information for a product which he/she wishes to buy, the pack ID number can be input by reading the barcode of the product using the scanner 38.

Once the pack ID number is input, the information output terminal MT retrieves the raw material block ID number for this pack ID number from the manufacturing log file in the store controller SC.

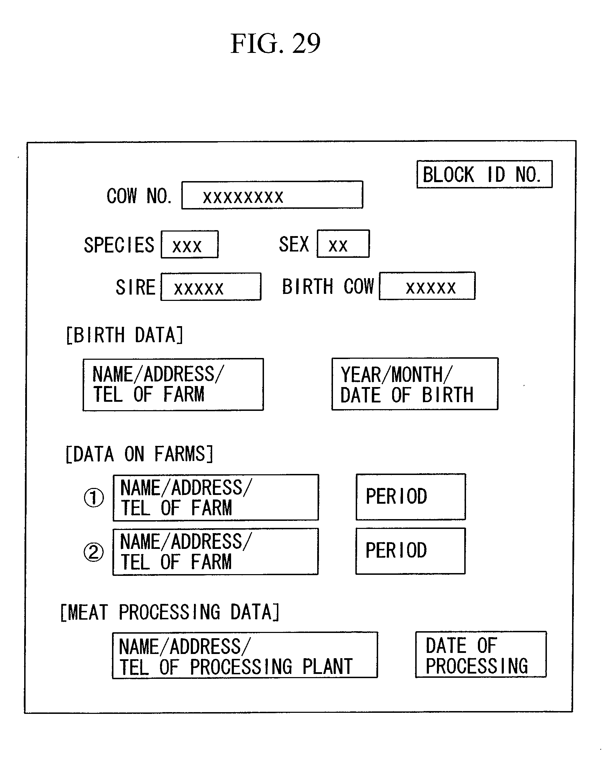

The individual identification code is then retrieved from the raw material block file in the store controller SC based on the aforementioned input block ID number or the retrieved raw material block ID number. The manufacturing channel data for the retrieved individual identification code is then retrieved from the manufacturing channel data file (SDF), and after referring to the data in the farm data file (BDF), this manufacturing channel data is displayed on the display 34 (see FIG. 29). The customer then checks the data displayed on the display 34, and if the customer desires a printout, he/she can print the data using the printer 37 by pressing a print command key provided on the operation panel 35.

Moreover, the above description describes a case where the customer displays or prints the manufacturing channel data of a purchased pack ID product by operating the information output terminal MT installed in the store, but the composition of the present invention allows the contents of the aforementioned manufacturing channel data file (SDF) and the farm data file (BDF) to be called up from a web server WS via the internet and displayed using the browser software of a home PC. Consequently, if the customer wants to check the manufacturing channel information for the purchased pack ID product after he/she returns home, he/she can do so at any time by connecting to the home page of the store where the product was purchased using his/her home PC. For this purpose, the home page address of the store is printed in the store information field on the receipt (see FIGs. 26A and 26B).

As described above, according to the product pricing and registration system of the present embodiment, either the raw material block ID number or the pack ID number are printed in the purchased product information field on the receipt, and so if the customer so desires, he/she can check the manufacturing channel information for the purchased product (pack ID product) using either the information output terminal MT installed in the store or his/her home PC.

The product discounting system is described as a fourth embodiment. This discounting system constitutes a part of a product manufacturing data and sales data processing system which performs (1) a product manufacturing and pricing process, (2) a clearance products discounting process, (3) a product registration / payment / sales data totaling process, and (4) a manufacturing and sales data preparation and output process.

In the discounting system of the present invention, the pack ID Number (ID number) is read from a displayed product which is to be discounted (clearance product) using a handy terminal HT (terminal), and the discount data or discounted price of the product which was input into the handy terminal HT is sent with the read ID number from the handy terminal HT to the file server FS (administration device), and is also stored in the file server FS (memory device).

Furthermore, in the product discounting system according to the present embodiment, at the checkout, the pack ID number is read from the price label of the product, and a determination is made as to whether or not discount data or a discounted price is stored in the file server FS linked with this pack ID number, and if so, the product is registered based on this discount data or discounted price.

Here, it is preferable that the handy terminal HT can accept the input of discount data or a discounted price at the point in time when the pack ID number of the displayed product to be discounted is read by the handy terminal HT.

Here, the point in time at which the handy terminal HT reads the pack ID number includes a time range extending a predetermined length of time before the ID was read, or a time range extending a predetermined length of time past the ID was read, or a time range extending in both these directions.

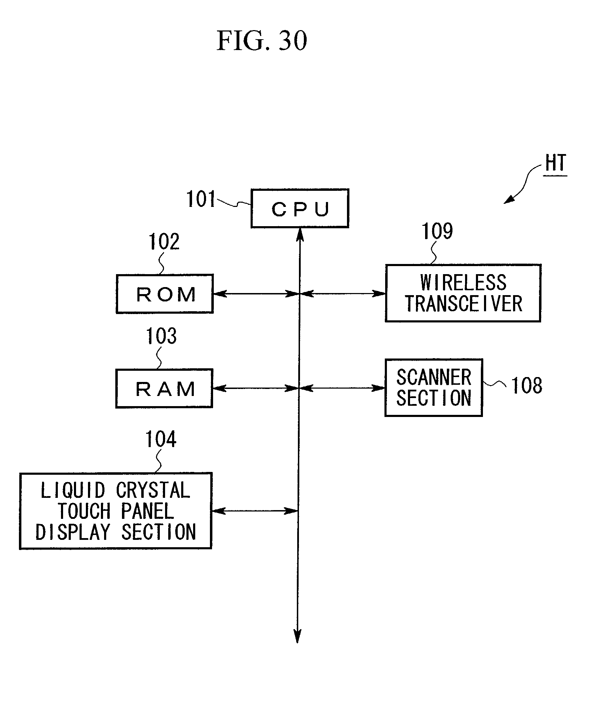

Next, the specific configuration of the product discounting method and discounting system is described with reference to FIGs. 30 to 33.

The present embodiment relates to a discounting method and the like for perishable foods. The general layout of the store in which the present embodiment is employed and the system configuration relating to the flow of the data processing in the store is the same as that shown in FIG. 1 and FIG. 2 (see FIG. 2). Furthermore, the weight label printer DPS and the POS registers PR can have the same electrical composition, functions and operation (see FIG. 3 and others) as those in the first embodiment, and the data configuration and the like of the PLU file and the manufacturing performance file can also be the same as the first embodiment. Consequently, those members and elements which are also present in the first embodiment are labeled with the same labels, and the descriptions thereof are omitted.

The handy terminal HT according to the present embodiment is described with reference to FIG. 30.

FIG. 30 is an electrical composition diagram showing the handy terminal HT. In the figure, label 101 indicates a CPU for controlling the entire operation of the information output terminal MT, and as shown in the figure, the other structural elements are connected to this CPU. Label 102 indicates a ROM in which the programs executed by the CPU 101 are stored, and this ROM 101 contains the programs defining the processes of the CPU 101 in the operations described below. Label 103 indicates a RAM used in the arithmetic processing of the CPU 101.

Label 104 indicates a liquid crystal touch panel display having a display function for displaying predetermined information according to display instructions received from the CPU 101, and a data input function. In other words, the liquid crystal touch panel display 104 has a function whereby data is input by detecting, when the liquid crystal display panel is touched, the position at which the panel was touched, and the operations of inputting and transmitting discount data, and of inverting the "automatic flag" which indicates the "ON/OFF" state of the function for automatically sending the input discount data (or the discounted price) and the pack ID number (ID number) for individually identifying each product to the weight pricing system (administration device) can be performed.

Label 108 indicates a scanner for reading the barcode on the label affixed to the product, and supplying the data thereof to the CPU 101. Label 109 indicates a wireless transceiver for communicating with a transceiver TR of the weight pricing system by means of wireless communication. Moreover, the wireless transceiver 109 may also communicate via cable.

Next, the operation of the product discounting system according to the present embodiment is described. The processes implemented by the present system are separated into

(1) a product manufacturing and pricing process,
(2) a clearance product discounting process,
(3) a product registration / payment / sales data totaling process, and
(4) a manufacturing and sales data preparation and output process.

Because the product manufacturing and pricing process (1) is performed according to the steps shown in FIG. 6, in the same manner as in the first embodiment, the product registration / payment / sales data totaling process (3) is performed according to the steps shown in FIG. 11, and the manufacturing and sales data preparation and output process (4) is performed in the same manner as in the first and second embodiments, detailed descriptions thereof are omitted.

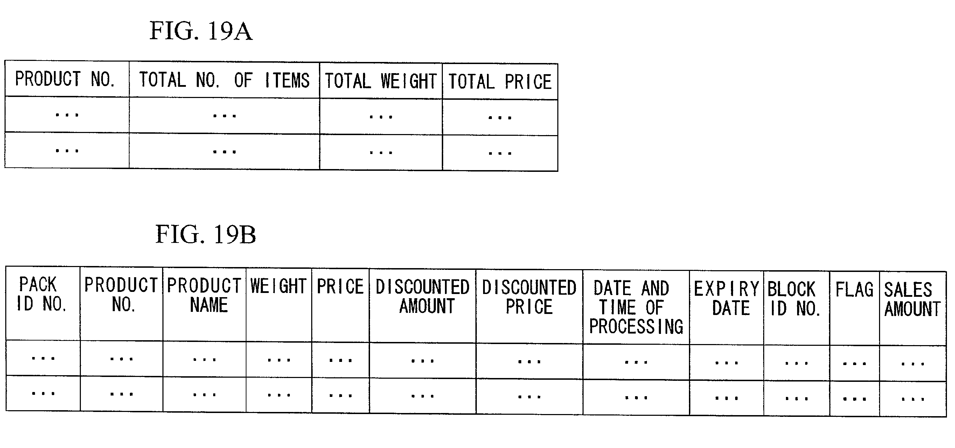

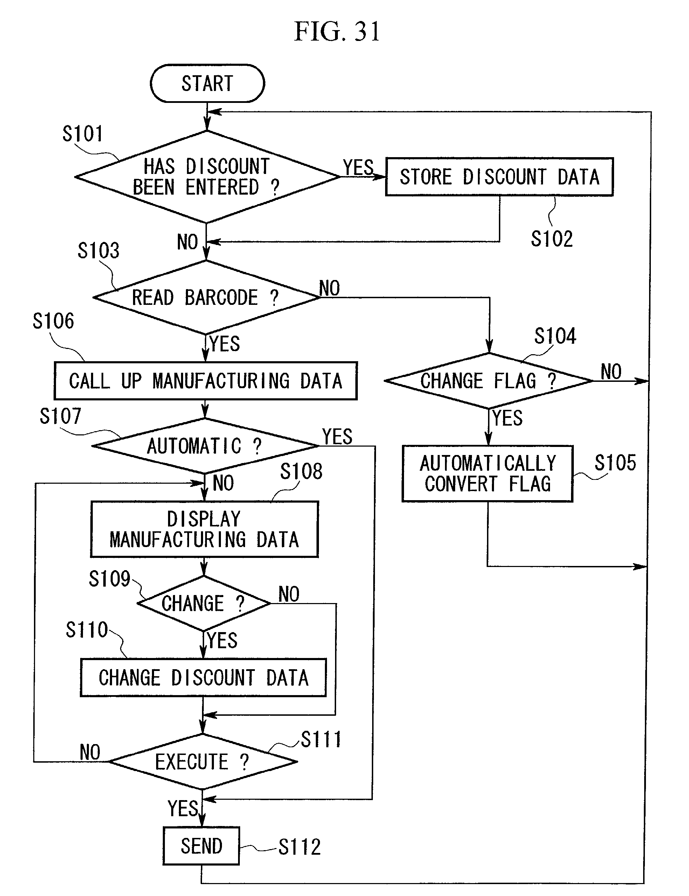

FIGs. 19A and 19B are diagrams showing the data configuration of the manufacturing performance file according to the present embodiment, and corresponds with FIGs. 10A and 10B described in the first embodiment. FIG. 31 differs from FIGs. 10A and 10B in that data entries for the amount of the discount of the product, the discounted price and the sales price are provided in the second file (the manufacturing log file) in FIG. 19B.

Moreover, in the same manner as in the first embodiment, the aforementioned manufacturing performance file (the totaled file and the manufacturing log file) is sent to the store controller SC of the POS system via the LAN.

(2) Clearance Product Discounting Process

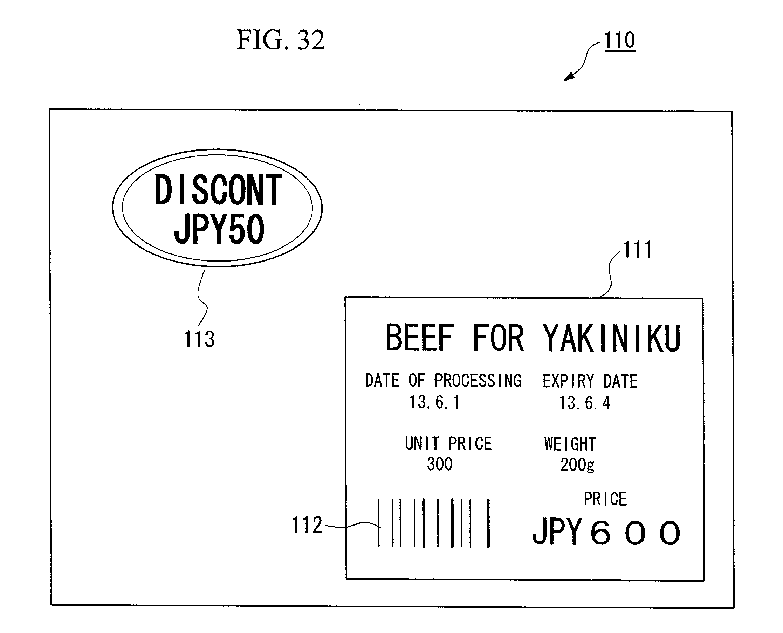

The discounting process for clearance products is performed using the handy terminal HT. FIG. 31 is a flow chart showing the operation of the handy terminal HT, and FIG. 32 is a schematic drawing showing the appearance of a clearance product.

Firstly, the employee (person in charge) views the expiry dates on the price labels 111 affixed to the products 110 displayed in the store, and searches for products which are nearing their expiry date or for which the product value has dropped (clearance products). The employee then decides the amount of the discount for the clearance products which he/she has found, and enters the amount of the discount (discount data) into the handy terminal HT.

The CPU 101 of the handy terminal HT determines whether or not the discount data has been input (step S101).

If step S101 returns "YES" (meaning that discount data has been input), the CPU 101 stores the input discount data in a predetermined area in the RAM 103 (step S102).

If step S101 returns "NO" (meaning that discount data has not been input), or if the process of step S102 has finished, the employee reads the pack ID barcode 112 from the price label 111 on the product 110 using the scanner 108 of the handy terminal HT, and the CPU 101 determines whether or not the barcode is a valid barcode showing a pack ID number, rather than a barcode wherein the flag shows the country code or a NON-PLU code (step S103).

If step S103 returns "NO" (when the barcode is not valid), a determination is made as to whether or not the operation for inverting the "automatic flag" which indicates the "ON/OFF" state of the function for automatically sending the discount data and the pack ID number to the weight pricing system has been performed (step S104). If step S104 returns "YES", the CPU 101 inverts the "automatic flag" (for example the "automatic flag" is changed from OFF to ON) (step S105). If step S105 returns "NO", the CPU 101 does nothing, and the process returns to step S101.

If step S103 returns "YES" (when the barcode is valid), then the CPU 101 performs manufacturing data retrieval in which the manufacturing data (data comprising the product data, product name, original price, amount of discount, discounted price, expiry data and the like (see FIG. 31)) corresponding with the pack ID number is received from the file server FS, by sending the pack ID number in the read barcode information to the file server FS of the weight pricing system (step S106).

After step S106, the CPU 101 determines whether or not the "automatic flag" is "ON" (automatic transmission mode) (step S107).

If step S107 returns "NO" (when automatic transmission mode is off), then the CPU 101 displays the product name, original price, amount of discount, discounted price, expiry data and the like included in the manufacturing data (the data retrieved in step S106) of the product indicated by the barcode read in step S103, on the liquid crystal touch panel display 104, so that the employee can check the manufacturing data (step S108).

After step S108, the CPU 101 determines whether or not the employee who viewed the display in step S108 has determined that the discount data needs to be changed, and performed the operation to change the discount data using the liquid crystal touch panel display 104 (step S109).

If step S109 returns "YES" (when the operation to change the discount data has been performed), then the CPU 101 replaces the discount data stored in the RAM 103 in step S102 with the discount data changed in step S109 (step S110).

When the process in step S110 has finished or if step S109 returns "NO" (the operation to change the discount data has not been performed), the CPU 101 determines whether or not the employee has performed the operation which executes the transmission of the discount data (the operation which executes the discount) using the liquid crystal touch panel display 104 (step S111).

If step S111 returns "YES" (the operation to execute the discount has been performed) or if step S107 returns "YES" (automatic transmission mode is enabled), the CPU 101 sends the pack ID number and the discount data of the product indicated by the barcode read in step S103 to the file server FS (the administration device and the memory device) (step S112). The process then returns to step S101.

The employee completes the discounting process by affixing a POP label 113, which is a discount sticker displaying the same value as the discount data input in step 101 or step 109 (for example "50 yen off"), to the product to be discounted (the product which underwent the discounting process in step S101 through step S112).

Consequently, when performing the product discounting process, by using the handy terminal HT of the present embodiment, it is not necessary for the employee to take a label printer onto the selling floor and issue barcode labels showing the discounted price on the selling floor, and in addition, it is also not necessary to affix the barcode label over the barcode on the original price label of the product, and the operation required to discount the product can thus be simplified and takes considerably less time.

If the discount data is the same for a plurality of products, then because the discount data, once stored in the RAM 103, remains stored in the RAM 103 even after being transmitted in step S112, by setting the "automatic flag" to "ON" and enabling the automatic transmission mode, the discounting process can be performed by simply reading the barcode of the product to be discounted using the scanner 108 of the handy terminal HT. In other words, in the discounting process in step S101 to step S112, the employee needs only to read the barcode of the product to be discounted in step S103.

Consequently, the greater the number of products for which the same discount data is applied, the simpler the operation required to discount the products becomes.

(3) Product Registration / Payment / Totaling Process

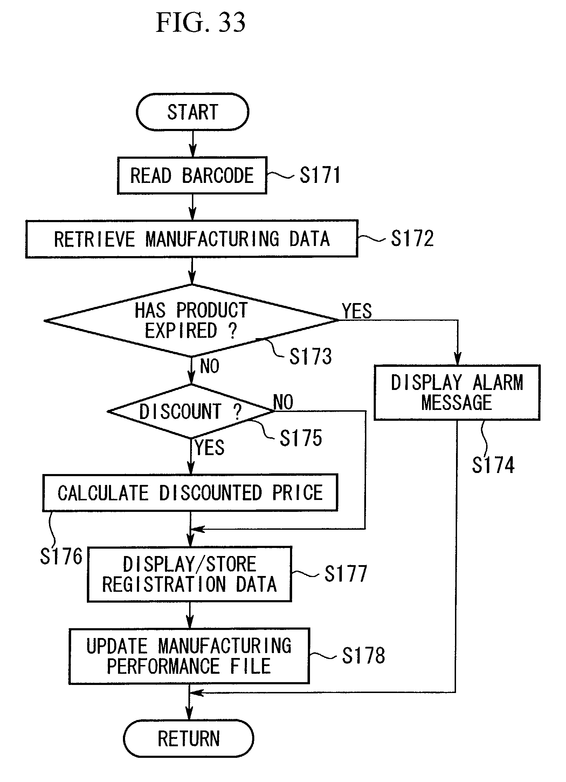

The product registration / payment / totaling process according to the present embodiment is performed according to the steps in FIG. 11, in the same manner as in the first embodiment, but the steps involved in the product registration process in step S61 are described in detail with reference to FIG. 33.

FIG. 33 shows the product registration process as performed by reading the manufacturing log from the manufacturing performance file stored in the store controller SC. In FIG. 33, firstly the barcode attached to the product, in other words the pack ID number (identification information) and the price, is read by the scanner 28 of the POS register PR (step S171). Consequently, once the pack ID number is obtained, manufacturing data (see FIG. 31) such as the product number and price and the like for the product which corresponds with the ID number is retrieved from the manufacturing log file in the manufacturing performance file stored in the store controller SC, via the communication section (step S172).

Subsequently, a determination is made as to whether or not the expiry date has passed by referring to the retrieved expiry date data (step S173). Moreover, this determination is made by referring to the date and time of the clock of the POS register PR.

If the product is determined to have expired ("YES" in step S173), a warning is displayed to inform the operator of the POS register PR of this fact. Moreover, a warning sound may also sound at the same time as the warning is displayed. (The process up to this point is the same as in the first embodiment).

On the other hand, if at step S173 the product is determined to have not expired ("NO" in step S173), then a determination is made as to whether or not the discount data read in step S172 is valid data (step S175). If the discount data is determined to be valid ("YES" in step S175), the aforementioned discounting process has been performed, and the discount is then subtracted from the price P0 read from the manufacturing log data to obtain the discounted price, and the price is changed to the discounted price (step S176).

Subsequently, or alternatively if step S175 returns "NO", product registration is performed in step S177, and the registration data, for example the product name, price, amount of discount (if a discount is applied), weight and the like is displayed, and also stored in the receipt buffer.

In step S178, the sales performance file and the manufacturing performance file are updated for the registered product. In other words, the registration data is sent to the store controller SC, and while the manufacturing performance file in the store controller SC is updated, the flag for the product in question is changed in the aforementioned manufacturing log file. Moreover, the registration data which is sent to the store controller SC is the product name and price in the case of a non-discounted product, and is the product name, the price and the amount of the discount in the case of a discounted product.

Moreover, the aforementioned manufacturing performance file is the same as that shown in FIG. 14, and comprises a file (totaled file) in which data on the total number of sales and data on the total monetary value of sales is linked to each product number.

(Other embodiments)

Moreover, in the case of the first to the fourth embodiments described above, the sales data and the disposal data for each pack ID number are totaled using the flag provided in the manufacturing log file which indicates the sale status of the product, but this data may also be totaled using the sales performance log file in which the pack ID numbers of sold products are stored (if the product was sold at a discount, the amount of the discount or the discounted price are also stored therein) and the disposal product log file in which the pack ID numbers of products marked for disposal are stored.

Even in this case, by extracting the same block ID number and pack ID number from the manufacturing log file, and searching the sales performance log file and the disposal products log file based on this pack ID number, a variety of data can be extracted and totaled for each block ID number.

In this manner, the method of totaling sales data and disposal data for each pack ID number is not limited to the methods described in the above embodiments.

Moreover, the embodiments above were described for the case of perishable food products which do not have a constant price, but the present invention can also be employed for fixed price products if those products are manufactured by processing a raw material block.

However, because the price is constant for fixed price products, the price can be determined by referring to the product pricing file (PLU file), and therefore price data does not need to be stored in the manufacturing log file.

Furthermore, when each product is not weighed individually, weight data is not stored in the manufacturing log file, but it is possible to weigh each product and store the resulting weight data in the manufacturing log file.

Furthermore, the conf (13 digit code) of the barcode in the present invention includes data on the date and time of processing, but the present invention is not limited to this configuration, and for example, in the barcode configuration shown in FIG. 9, the data on the date and time of processing, which extends from the 6th to the 11th digit, can be omitted, and a one digit label printer machine number code which specifies a label printer can be added instead (8 digit code). In this case, the number sequence is set to append a number sequence from each label printer. Furthermore, because data on the date and time of processing is registered in the manufacturing log file linked with each ID number, this data can be obtained by referring to the PLU file.

Moreover, in the present invention, because each perishable food product is individually identified by means of the pack ID number, the following application is also possible. In other words, transaction data (detailed information on the registered products and payment information) for each customer who has gone through the checkout process at a POS register PR is stored as an electronic journal (electronic log) in the POS register PR and the store controller SC for a predetermined length of time. When a customer brings a product to the store wishing to return it, or wants to check the transaction data, the electronic log can be called up and displayed. Conventionally, by inputting the receipt number printed on the receipt, the transaction data for this receipt number was called up and displayed.

When a product bearing a pack ID number is registered, if the pack ID number is also stored with the electronic log data, then by inputting the pack ID number, transaction data including the product bearing this pack ID number can be retrieved from the electronic log data and displayed, and the desired transaction data can therefore be called up without entering the receipt number.

Consequently, when a customer wishes to return a pack ID product, the returns process can be performed without the customer having to bring the receipt. (Moreover, because it is possible that the same pack ID number may be reused after a predetermined period of time, if entering a pack ID number returns more than one set of transaction data, the most recent transaction data is displayed preferentially).

Moreover, in the third embodiment described above, the receipt is issued by being printed by a printer, but instead of printing, the receipt can be issued by writing the receipt data to a recording medium carried by the customer, by transmission by e-mail, or by transmission by FAX. Of course, any combination of these methods may also be used.

Furthermore, in the embodiments described above, the block ID number or the pack ID number were printed on the receipt, but during product registration the manufacturing channel data could also be retrieved based on the pack ID number, and printed directly on the receipt. In this case, the manufacturing channel data is only printed on the receipts of those customers who request it.

If a customer administration system is in place, then by setting in the customer data whether or not a customer requires the manufacturing channel information to be printed, it is possible to automatically determine whether or not the information should be printed by inputting a customer number.

Furthermore, the example used in the embodiments described above was beef, but the manufacturing channel data for other meats such as pork, lamb and poultry, or for fish or vegetables and fruits may also be stored against a block ID number.

Moreover, the storage of the manufacturing channel data is not limited to any specific storage method, provided that the data is stored linked with the block ID number and can be retrieved based on the block ID number.

Furthermore, in the fourth embodiment described above, the fact that a product is discounted can be indicated by any of the following methods.

(1) If the desired discount process is the same for all the products of the same type on a specific shelf, then the discount may be displayed on the shelf itself,

(2) the discount may be hand written in red marker on the price label,

(3) an indication that a product is discounted may be printed using a simple printer which does not print a barcode, and affixed to each product,

(4) if there is only one type of discount or only several types, an employee can carry either one or several stamps with which he/she stamps the price labels.

Furthermore, in the aforementioned embodiment, the handy terminal HT may comprise the stamp or the simple printer described above for indicating that a product is discounted, or a function for issuing a barcode label (a barcode showing the discounted price and the like) of the present embodiment.

Furthermore, it is convenient and advantageous if the handy terminal HT is also equipped with other modes which comprise functions for checking product data, reordering products, and checking performance and the like, in addition to the discounting process.

Furthermore, the discounting process for clearance products may be structured so that the handy terminal sends the data for a plurality of products together instead of communicating with the administration device for each product.

Furthermore, in the aforementioned embodiments, the discount process is not limited to a configuration wherein the discount data is input directly, and configurations in which the discounted price or a discount percentage are input may also be used instead.

Having now fully described the invention, it will be apparent to one of ordinary skill in the art that many changes and modifications can be made thereto without departing from the spirit and scope of the invention as set forth herein.

**Claims**

1. A product manufacturing data processing method, wherein a first identification number which can uniquely identify each product is printed as a machine readable code such as a barcode on a price label of a perishable food product, and manufacturing data including a second identification number for identifying a raw material block used to manufacture said product is stored linked with said first identification number.

2. A product manufacturing data processing method according to claim 1, wherein data required for product registration at a checkout such as a product code and a price is included in said manufacturing data stored linked with said first identification number.

3. A product manufacturing data processing method according to claim 2, wherein expiry date data for said product is included in said manufacturing data stored linked with said first identification number.

4. A weight pricing device which weighs a product, calculates a price from a unit price and a weight of said product, and prints a calculated price on a price label, wherein
a first identification number which can individually identify each product is printed on said label as a machine readable code such as a barcode, and data required to process said product at a checkout such as a product code and a price, and a second identification number for identifying a raw material block used to manufacture said product, are stored as manufacturing data.

5. A product sales data processing method, wherein when pricing a product, a first identification number is printed on a price label as a machine readable code such as a barcode, and manufacturing data including a second identification number linked to said first identification number for identifying a raw material block used to manufacture said product is stored, and at a checkout, sales data is totaled linked with said first identification number.

6. A product sales data processing method according to claim 5, wherein said manufacturing data linked with said first identification number includes data required to perform product registration including a product code and a price, and at a checkout, said first identification number is read from said price label of said product, and said data required for performing product registration for said product bearing said first identification number is retrieved from said stored manufacturing data, and a registration process for said product is performed based on said read data.

7. A product sales data processing method according to claim 5, wherein in totaling said sales data, products sold at a discount and products not sold at a discount can be differentiated.

8. A product sales data processing method according to claim 5, wherein when a product is marked for disposal, disposal data is totaled linked with said first identification number.

9. A product sales data processing method according to claim 5, wherein said sales data is extracted for each second identification number, and total sales data is calculated and totaled for each second identification number.

10. A product sales data processing method according to claim 5, wherein said manufacturing data and said sales data are totaled and compared for each second identification number, and inventory data for said product is calculated and totaled for each second identification number.

11. A product sales data processing method according to claim 5, wherein said manufacturing data, said sales data and said disposal data are totaled for each second identification number, and product loss data is calculated and totaled for each second identification number.

12. A product sales data processing device comprising;

manufacturing data storage means which stores manufacturing data including data required for product registration such as a product code and a price linked with a first identification number which is attached to a price label of each product, and a second identification number for identifying a raw material block used to manufacture a product,
identification number reading means which reads said first identification number from a price label of a product purchased by a customer, and
totaling means which retrieves data required to perform product registration for a product identified by said first identification number from said manufacturing data storage means, performs a registration process for said product based on said retrieved data, and totals sales data linked with said first identification number.

13. A product sales data processing method, wherein when pricing a product, a first identification number for individually identifying each product is printed on a price label as a machine readable code such as a barcode, and manufacturing data including an expiry date data for said product is stored linked with said first identification number,

at a checkout, said first identification number is read from a price label of a product purchased by said customer, manufacturing data including said expiry date data of said product identified by said first identification number is retrieved from said manufacturing data, a registration process is performed for said product based on said retrieved manufacturing data, and a determination is made as to whether or not said product has expired by comparing a current date and time with said read expiry date data,
and if said product is determined to have expired, a warning is displayed.

14. A product pricing method, which prints an identification number which can individually identify each product as a barcode on a price label of a perishable food product, and stores manufacturing data including price data linked with said identification number, wherein

for each product, said price data is printed as part of said barcode, together with said identification number.

15. A product pricing method according to claim 14, wherein said identification number and said price data are printed on each product as a one stage barcode.

16. A product pricing method according to claim 14, wherein said manufacturing data which includes said price data includes data indicating a classification of said product, and said identification number, said classification of said product and said price data are printed as a barcode on each product.

17. A product pricing method according to claim 16, wherein said identification number, said classification of said product, and said price data are printed on each product as a one stage barcode.

18. A product pricing method according to claim 17, wherein said data which indicates said classification of said product comprises a two digit flag at a beginning of data in said barcode.

19. A product pricing method according to claim 14, wherein said identification number includes data indicating a classification of said product, and said identification number, said classification of said product and said price data are printed as a one stage barcode on each product.

20. A product registration processing method wherein when a barcode of said pricing method according to claim 14 is read from a product at a checkout, a registration payment process is performed using said pricing data read from said barcode and said registration data is stored, and subsequently, said stored registration data is calculated as sales performance data based on said identification number.

21. A product registration processing method wherein when a barcode of said pricing method according to claim 16 is read from a product at a checkout, a registration payment process is performed using said classification of said product and said price data read from said barcode, a receipt on which is printed said classification and said price of said purchased product is issued and said registration data is stored, and subsequently, said stored registration data is calculated as sales performance data based on said identification number.

22. A product registration processing method according to claim 20, wherein said product registration processing method is executed when manufacturing data for said identification number cannot be retrieved.

23. A product having a barcode according to said pricing method according to claim 14.

24. A pricing device which weighs a weight of a perishable food product, calculates a price of said product based on a weight and a unit price of said perishable food product, prints an identification number which can individually identify each perishable food product and said price on a price label, and stores manufacturing data linked with said identification number including said price.

25. A pricing device according to claim 24, wherein said barcode is a one stage barcode including classification data for said product.

26. A POS system which performs processing based on a barcode read from said product according to claim 23, comprising an administration device which stores manufacturing data relating to an identification number, and a POS terminal which communicates with said administration device, wherein

when said POS terminal reads a barcode from said product at a checkout,
if manufacturing data for an identification number of said read barcode can be received from said administration device, said product registration process and a receipt printing process are performed based on said received data, whereas
if manufacturing data for said identification number of said read barcode cannot be received from said administration device, said product registration process and said receipt printing process are performed based on a product classification and a price read from said barcode, and said registration data is stored, and subsequently, said stored registration data is sent to said administration device, and said administration device stores said received registration data as sales performance data based on said identification number.

27. A POS system according to claim 26, wherein transaction data which is registration and payment data in said POS terminal is stored, and transaction data including data for said product bearing said identification number can be retrieved by inputting said identification number.

28. A product pricing and registration system comprising a pricing device which, when pricing a weighed product, prints an identification number (pack ID) for individually identifying each product on a pricing label as a barcode, and stores manufacturing data including an identification number (block ID) for identifying a raw material block for said product linked with said pack ID,

   and a registration device which, when registering a product of said pack ID, outputs either one of said pack ID, and said block ID retrieved based on said pack ID, as receipt data.

29. A product pricing and registration system according to claim 28, wherein said output of either one of said pack ID and said block ID as receipt data is performed by any one of printing on receipt paper, writing to a recordable medium, transmission by e-mail and transmission by facsimile, and a combination thereof.

30. A product pricing and registration system according to claim 28, comprising storage means which stores manufacturing data for a raw material block corresponding with said block ID, and a terminal device which retrieves manufacturing channel information for said block ID, retrieved based on either one of said block ID and said pack ID, from said storage means by inputting either one of said pack ID and said block ID, and then performs either one of displaying and printing said manufacturing channel information.

31. A product pricing and registration system according to claim 30, wherein said terminal device is installed in a store and can be operated by a customer.

32. A product pricing and registration system according to claim 30, wherein said storage means can be accessed using an internet connected PC, and by inputting either one of a pack ID and a block ID using a browser on said PC, said manufacturing channel data for said block ID can be displayed on a display device of said PC.

33. A product pricing and registration system, comprising a pricing device which, when pricing a weighed product, prints an identification number (pack ID) for individually identifying each product as a barcode on a price label, and stores manufacturing data including an identification number (block ID) for individually identifying a raw material block for said product corresponding with said pack ID,

   manufacturing channel storage means which stores manufacturing channel information for said block corresponding with said block ID,
   and a registration device which, when registering a product of a pack ID, retrieves a block ID from said pack ID, retrieves manufacturing channel information from said read block ID, and prints said retrieved manufacturing channel information on a receipt.

34. A product pricing and registration system according to claim 33, wherein said manufacturing channel information is only printed on a receipt if a customer so desires.

35. A product discounting method, which records an identification number for individually identifying each product on a price label in a machine readable manner, and stores manufacturing data including price data indicating a price of a product, linked with said identification number, in storage means, wherein

   said identification number is read from a displayed product which is to be discounted using a terminal, and either one of discount data and a discounted price for said product input into said terminal is sent to an administration device from said terminal together with said read identification number and stored in said storage means, and
   at a checkout, said identification number is read from said price label on said product, and if either one of said discount data and said discounted price linked with said identification number are stored in said storage means, registration is performed for said product based on either one of said discount data and said discounted price.

36. A product discounting method according to claim 35, wherein products on display which are discounted are marked to indicate that said products are discounted.

37. A product discounting system, comprising label issuing means which records an identification number which can individually identify each product in a machine readable manner on a price label,

storage means which stores manufacturing data linked with said identification number including price information showing a price of a product,

a terminal which reads said identification number from a displayed product which is discounted, and transmits either one of discount data and a discounted price for said product which was input, together with said read identification number,

an administration device which receives said identification number and either one of said discount data and said discounted price sent from said terminal, and stores either one of said discount data and said discounted price in said storage means linked with said identification number, and

a product registration device which reads said identification number from a price label of a purchased product, and if either one of said discount data and said discounted price linked with said identification number is stored in said storage means, registers said product based on either one of said discount data and said discounted price.

FIG. 1

FIG. 2

FIG. 3

DPS

1 — CPU

2 — ROM

3 — RAM

4 — DISPLAY SECTION

5 — OPERATION SECTION

8 — COMMUNICATION SECTION → LAN

7 — WEIGHING SECTION

6 — PRINTER SECTION

9 — CLOCK SECTION

FIG. 4

PR

21 — CPU

22 — ROM

29 — COMMUNICATION SECTION — LAN

23 — RAM

28 — SCANNER SECTION

24 — DISPLAY SECTION

27 — PRINTER SECTION

25 — OPERATION SECTION

26 — CLOCK SECTION

FIG. 5

| PRODUCT NO. | PRODUCT NAME | UNIT PRICE (JP¥) | TARE WEIGHT (g) | SHELF LIFE (days) | CLASSIF-ICATION |
|---|---|---|---|---|---|
| ⋮ | ⋮ | ⋮ | ⋮ | ⋮ | ⋮ |
| 23456 | BEEF FOR SUKIYAKI | 300 | 5 | 3 | |
| ⋮ | ⋮ | ⋮ | ⋮ | ⋮ | ⋮ |

## FIG. 6

```
          START
            │
            ▼
  SET RAW MATERIAL ─── S50
     BLOCK ID
            │
            ▼
  INPUT PRODUCT NO. ─── S51
            │
            ▼
  RETRIEVE PRODUCT DATA ─── S52
            │
            ▼
    WEIGH PRODUCT ─── S53
            │
            ▼
   CALCULATE PRICE ─── S54
            │
            ▼
     PRINT LABEL ─── S55
            │
            ▼
  TOTAL PERFORMANCE DATA ─── S56
            │
            ▼
  NO      COMPLETED ─── S57
            │
           YES
            │
            ▼
           END
```

FIG. 7

| ID | DATE IN STOCK | BLOCK PRODUCT NAME | WEIGHT PURCHASED | PRICE OF PURCHASE | UNIT PRICE OF PURCHASE | STOCK REMAINING |
|---|---|---|---|---|---|---|
| 12 | 6. 20 9:00 | SIDE ROAST | 5. 3kg | 12, 190 | 2, 300/kg | 0. 3kg |
| 13 | 6. 20 9:00 | SIDE ROAST | 5. 6kg | 12, 880 | 2, 300/kg | 0. 4kg |
| ⋮ | ⋮ | ⋮ | ⋮ | ⋮ | ⋮ | ⋮ |

EP 1 271 378 A2

FIG. 8

FIRST LABEL

PRODUCT

**BEEF FOR YAKINIKU**

DATE OF PROCESSING
13. 6. 1

EXPIRY DATE
13. 6. 4

UNIT PRICE
300

WEIGHT
200g

PRICE

JPY 6 0 0

FIG. 9

| 13 | 12 | 11 | 10 | 9 | 8 | 7 | 6 | 5 | 4 | 3 | 2 | 1 |
|----|----|----|----|----|----|----|----|----|----|----|----|----|
| F | F | D | D | H | H | H | H | N | N | N | N | C/D |
| FLAG | | DATE | | HOUR & MINUTE | | | | NUMBER SEQUENCE | | | | CHECK DIGIT |

FIG. 10A

| PRODUCT NO. | TOTAL NUMBER OF ITEMS | TOTAL WEIGHT | TOTAL PRICE |
|---|---|---|---|
| ... | ... | ... | ... |
| ... | ... | ... | ... |

FIG. 10B

| PACK ID NO. | PRODUCT NO. | PRICE | WEIGHT | COST PRICE | DATE/TIME OF PROCESSING | EXPIRY DATE | BLOCK ID NO. | FLAG |
|---|---|---|---|---|---|---|---|---|
| ... | ... | ... | ... | ... | ... | ... | ... | ... |
| ... | ... | ... | ... | ... | ... | ... | ... | ... |

EP 1 271 378 A2

FIG. 11

```
                    ┌──────────────┐
                    │    START     │
                    └──────┬───────┘
                           │
      ┌────────────────────▼──────────────┐
      │    ║ PRODUCT REGISTRATION ║        │──── S61
      │    └──────────────────────┘        │
      └────────────────┬──────────────────┘
                       │
              ┌────────▼────────┐
    NO  ◄─────◄   COMPLETED ?    ►────── S62
              └────────┬────────┘
                    YES │
            ┌──────────▼──────────┐
            │  DISPLAY TOTAL PRICE │──── S63
            └──────────┬──────────┘
                       │
            ┌──────────▼──────────┐
            │   PAYMENT PROCESS    │──── S64
            └──────────┬──────────┘
                       │
                 ┌─────▼─────┐
                 │    END    │
                 └───────────┘
```

## FIG. 12

```
                    ┌──────────────┐
                    │    START     │
                    └──────┬───────┘
                           │
                           ▼
                 ┌───────────────────┐
                 │   READ  BARCODE   │──── S71
                 └─────────┬─────────┘
                           │
                           ▼
          ┌────────────────────────────────┐
          │  RETRIEVE  MANUFACTURING  DATA  │──── S72
          └────────────────┬───────────────┘
                           │          S73
                           ▼
                      ╱─────────╲        YES
                    ╱  EXPIRED ?  ╲──────────────────────┐
                     ╲           ╱                       │
                      ╲─────────╱                        │
                           │ NO                          │
                           │         S75                 ▼
                           ▼                   ┌──────────────────┐
                  ╱─────────────────╲  NO      │  DISPLAY  ALARM  │
                ╱     HAS  A          ╲────┐    │     MESSAGE      │
               ╱  PREDETERMINED PERIOD ╲   │    └─────────┬────────┘
                ╲      PASSED?         ╱    │              │
                 ╲───────────────────╱     │             S74
                           │ YES           │
                           │      S76      │
                           ▼               │
               ┌────────────────────────┐  │
               │ PERFORM DISCOUNT PROCESS│  │
               └────────────┬───────────┘  │
                            │◄──────────────┘
                            │
                            ▼        S77
                  ┌──────────────────┐
                  │   UPDATE  SALES  │
                  │ PERFORMANCE  FILE│
                  └─────────┬────────┘
                            │◄─────────────────────┐
                            ▼
                    ┌──────────────┐
                    │    RETURN    │
                    └──────────────┘
```

FIG. 13

| PRODUCT NO. | TIME FOR DISCOUNT | AMOUNT OF DISCOUNT (PERCENTAGE) |
|---|---|---|
| . . . | . . . | . . . |
| 2 3 4 5 6 | 0 2 0 0 | 5 0 % |
| . . . | . . . | . . . |

DATE    TIME

FIG. 14

| PRODUCT NO. | TOTAL NO. SOLD | TOTAL SALES |
|---|---|---|
| . . . | . . . | . . . |
| . . . | . . . | . . . |
| . . . | . . . | . . . |

FIG. 15

BLOCK ID = BN

| PRODUCT NO. (C) | MANUFACTURING DATA (S) | | | SALES DATA (H) | | | LOSS DATA (L) | | |
|---|---|---|---|---|---|---|---|---|---|
| | NO. OF ITEMS N | PRICE P | WEIGHT W | NO. OF ITEMS N | PRICE P | WEIGHT W | NO. OF ITEMS N | PRICE P | WEIGHT W |
| C1 | SN1 | SP1 | SW1 | HN1 | HP1 | HW1 | LN1 | LP1 | LW1 |
| C2 | SN2 | SP2 | SW2 | HN2 | HP2 | HW2 | LN2 | LP2 | LW2 |
| C3 | SN3 | SP3 | SW3 | HN3 | HP3 | HW3 | LN3 | LP3 | LW3 |
| ⋮ | ⋮ | ⋮ | ⋮ | ⋮ | ⋮ | ⋮ | ⋮ | ⋮ | ⋮ |
| TOTAL T | SNT | SPT | SWT | HNT | HPT | HWT | LNT | LPT | LWT |

## FIG. 16A

1) BLOCK ID NO. = CHANGES IN PURCHASING, PROCESSING(MANUFACTURING), AND SALES PROCESS OF #12

| | PURCHASING PERFORMANCE | | PROCESSING (MANUFACTURING) PERFORMANCE | | SALES PERFORMANCE | |
|---|---|---|---|---|---|---|
| DATE | WEIGHT | PURCHASE PRICE | WEIGHT | SELLING PRICE | WEIGHT | SALLING PRICE |
| 20TH JUNE | 5.3kg | JPY12,190 | 2.8kg | JPY10,080 | 2.7kg | JPY9,450 |
| 21ST JUNE | (PURCHASED 5.3kg OF BEEF SIDE ROAST) | | 1.6kg | JPY5,440 | 1.4kg | JPY4,620 |
| 22ND JUNE | | | 0.6kg | JPY1,800 | 0.7kg | JPY1,820 |
| TOTAL | 5.3kg | JPY12,190 | 5.0kg | JPY17,320 | 4.8kg | JPY15,890 |
| UNIT PRICE/kg | JPY2,300/kg | | JPY3,464/kg | | JPY3,310/kg | |

## FIG. 16B

2) BLOCK ID NO. = LOSS OF #12

MANUFACTURING PROCESS:0.3kg × @JPY2,300/kg = JPY690

SALES PROCESS:0.2kg × @JPY2,300/kg = JPY460

## FIG. 16C

3) BLOCK ID NO. = CALCULATION OF PURCHASING, GROSS MARGINS, LOSS FOR #12

| MARKUP RATE | (3,464 − 2,300) ÷ 3,464 = 33.6% |
|---|---|
| TOTAL MARKUP | (12,190 ÷ 0.664) − 12,190 = JPY6,168 |
| TOTAL GROSS MARGIN | 15,890 − 12,190 = JPY3,700 |
| GROSS MARGIN RATE | 3,700 ÷ 15,890 = 23.3% |
| GROSS MARGIN LOSS | 6,168 − 3,700 = JPY2,468 |

## FIG. 16D

4) BLOCK ID NO. = ANALYSIS OF LOSS OF #12

| | PROCESSING | SALE | TOTAL |
|---|---|---|---|
| PRODUCT LOSS | JP¥690 (0.3kg) | JP¥460 (0.2kg) | JP¥1,150 (0.5kg) |
| GROSS MARGIN LOSS | JP¥348 (MARKUP LOSS) | JP¥2,120 (DISCOUNT) | JP¥2,468 |
| TOTAL | JP¥1,038 | JP¥2,580 | JP¥3,618 |

EP 1 271 378 A2

## FIG. 17

PRECONDITIONS FOR THIS EXAMPLE

|  | WEIGHT | UNIT PRICE/kg | PRICE |
|---|---|---|---|
| PURCHASE | 5.3kg | JPY2,300/kg (COST PRICE) | JPY12,190 (PURCHASE PRICE) |
| PROCESSING | 5.0kg | JPY3,464 (MARKUP) | JPY17,320 (TOTAL PROCESSED) |
| SALE | 4.8kg | JPY3,310 (ACTUAL SELLING PRICE) | JPY15,890 (TOTAL SALES) |

CHANGES IN WEIGHT

CHANGES IN PRICE

FIG. 18

| ① | ② | ③ | ④ | ⑤ | ⑥ | ⑦ | ⑧ | ⑨ | ⑩ | ⑪ | ⑫ | ⑬ |
|---|---|---|---|---|---|---|---|---|---|---|---|---|
| F | F | M | W | C | C | C | C | P | P | P | P | C/D |
| FLAG | | MACHINE NO. | DAY OF THE WEEK | NUMBER SEQUENCE | | | | SELLING PRICE | | | | CHECK DIGIT |

PACK ID NO.

EP 1 271 378 A2

FIG. 19A

| PRODUCT NO. | TOTAL NO. OF ITEMS | TOTAL WEIGHT | TOTAL PRICE |
|---|---|---|---|
| . . . | . . . | . . . | . . . |
| . . . | . . . | . . . | . . . |

FIG. 19B

| PACK ID NO. | PRODUCT NO. | PRODUCT NAME | WEIGHT | PRICE | DISCOUNTED AMOUNT | DISCOUNTED PRICE | DATE AND TIME OF PROCESSING | EXPIRY DATE | BLOCK ID NO. | FLAG | SALES AMOUNT |
|---|---|---|---|---|---|---|---|---|---|---|---|
| . . . | . . . | . . . | . . . | . . . | . . . | . . . | . . . | . . . | . . . | . . . | . . . |
| . . . | . . . | . . . | . . . | . . . | . . . | . . . | . . . | . . . | . . . | . . . | . . . |

# FIG. 20

```
                    ┌─────────┐
                    │  START  │
                    └─────────┘
                         │
                         ▼
              ┌──────────────────┐
              │   READ BARCODE   │──── S81
              └──────────────────┘
                         │
                         ▼
         ┌──────────────────────────────┐
         │  RETRIEVE MANUFACTURING DATA  │──── S82
         └──────────────────────────────┘
                         │
                         ▼
              ◇ HAS PRODUCT EXPIRED ? ◇ ──YES──┐
                         │  S83                  │
                         │ NO                    │
                         ▼                       │
              ◇ IS PRICE "0" ? ◇ ──NO──┐         │
                         │  S85          │        │
                         │ YES           │        │
                         ▼               │        │
              ┌──────────────────┐       │        ▼
      S86 ────│  INPUT PRICE KEY │       │   ┌──────────┐
              └──────────────────┘       │   │ DISPLAY  │
                         │◄──────────────┘   │  ALARM   │
                         ▼                   │ MESSAGE  │
      S87 ── ◇ IS PRICE DIFFERENT ? ◇ ──NO─┐ └──────────┘
                         │                  │    S84
                         │ YES              │
                         ▼                  │
         ┌──────────────────────────────┐  │
   S88 ──│  CALCULATE AMOUNT OF DISCOUNT │  │
         └──────────────────────────────┘  │
                         │◄─────────────────┘
                         ▼
         ┌──────────────────────────────┐
   S89 ──│  DISPLAY/STORE REGISTRATION DATA │
         └──────────────────────────────┘
                         │
                         ▼
         ┌──────────────────────────────┐
   S90 ──│  UPDATE SALES PERFORMANCE FILE │
         └──────────────────────────────┘
                         │
                         ▼
                    ┌─────────┐
                    │ RETURN  │
                    └─────────┘
```

## FIG. 21

START

READ BARCODE ——S91

DETERMINE CLASSIFICATION ——S92

S93——⟨ IS PRICE "0" ? ⟩——NO

YES

S94—— INPUT PRICE KEY

DISPLAY/STORE REGISTRATION DATA ——S95

STORE SALES PERFORMANCE FILE ——S96

RETURN

# FIG. 22

OFFICE

BACK ROOM

SC

STORE CONTROLLER

AW

WEIGHING/PACKAGING/LABELING MACHINE

DPS

WEIGHT LABEL PRINTER

DP

PRICE LABEL PRINTER

PRODUCT SHELVES

SELLING FLOOR

PRODUCT SHELVES

PRODUCT SHELVES

PRODUCT SHELVES

PRODUCT SHELVES

PRODUCT SHELVES

PRODUCT SHELVES

PRODUCT SHELVES

PRODUCT SHELVES

HT

PR

PR

PR

ENTRANCE

EXIT

MT

MT

FIG. 23

EP 1 271 378 A2

FIG. 24

FIG. 25

| ID | DATE/TIME IN STOCK | BLOCK PRODUCTNAME | INDIVIDUAL IDENTIFICATION CODE | PURCHASED WEIGHT | PURCHASED PRICE | UNIT PRICE OF PURCHASE | STOCK REMAINING BLOCK |
|---|---|---|---|---|---|---|---|
| 12 | 6. 20 9:00 | SIDE ROAST | 95013689 | 5. 3kg | 12, 190 | 2, 300/kg | 0. 3kg |
| 13 | 6. 20 9:00 | SIDE ROAST | 95013690 | 5. 6kg | 12, 880 | 2, 300/kg | 0. 4kg |
| ⋮ | ⋮ | ⋮ | ⋮ | ⋮ | ⋮ | ⋮ | ⋮ |

EP 1 271 378 A2

## FIG. 26A

FIELD FOR
STORE DATA

RECEIPT

FIELD FOR
PRODUCT
DETAILS

:

BEEF FOR SUKIYAKI
150g    JPY500

(BLOCK ID NO. xxx)

:

FIELD FOR PAYMENT DETAILS

## FIG. 26B

FIELD FOR
STORE DATA

RECEIPT

FIELD FOR
PRODUCT
DETAILS

:

BEEF
(PACK NO.  xxxx)
JPY500

:

FIELD FOR PAYMENT DETAILS

EP 1 271 378 A2

## FIG. 27

MANUFACTURING PROCESS DATA FILE (SDF)

| INDIVIDUAL IDENTIFICATION CODE | SPECIES | SEX | BIRTH DATA | FARMS LIVED ON | PROCESSING DATA |
|---|---|---|---|---|---|
| . . . . | . . . . | . . . . | . . . . | . . . . | . . . . |
| XXXXXXX | XXX | XX | XXXXX | XXXXX | XXXXX |
| . . . . | . . . . | . . . . | . . . . | . . . . | . . . . |

## FIG. 28

FARM DATA FILE (BDF)

| FARM CODE | NAME | ADDRESS | TEL NO. | PERSON IN CHARGE |
|---|---|---|---|---|
| . . . . | . . . . | . . . . | . . . . | . . . . |
| XXXXXXX | XXXXXX | XXXXXX | XXXXX | XXXXX |
| . . . . | . . . . | . . . . | . . . . | . . . . |

# FIG. 29

COW NO. | xxxxxxxx |     BLOCK ID NO.

SPECIES | xxx |     SEX | xx |

SIRE | xxxxx |     BIRTH COW | xxxxx |

[BIRTH DATA]

| NAME/ADDRESS/<br>TEL OF FARM | | YEAR/MONTH/<br>DATE OF BIRTH |

[DATA ON FARMS]

① | NAME/ADDRESS/<br>TEL OF FARM | | PERIOD |

② | NAME/ADDRESS/<br>TEL OF FARM | | PERIOD |

[MEAT PROCESSING DATA]

| NAME/ADDRESS/<br>TEL OF PROCESSING PLANT | | DATE OF<br>PROCESSING |

EP 1 271 378 A2

FIG. 30

FIG. 31

START

S101 — HAS DISCOUNT BEEN ENTERED ?
— YES → STORE DISCOUNT DATA — S102
— NO

S103 — READ BARCODE ?
— NO →
— YES

S106 — CALL UP MANUFACTURING DATA

S104 — CHANGE FLAG ?
— NO →
— YES

S107 — AUTOMATIC ?
— YES
— NO

S105 — AUTOMATICALLY CONVERT FLAG

S108 — DISPLAY MANUFACTURING DATA

S109 — CHANGE ?
— NO
— YES

S110 — CHANGE DISCOUNT DATA

S111 — EXECUTE ?
— NO
— YES

SEND — S112

# FIG. 32

EP 1 271 378 A2

## FIG. 33

START

READ BARCODE ~ S171

RETRIEVE MANUFACTURING DATA ~ S172

HAS PRODUCT EXPIRED ? — YES → DISPLAY ALARM MESSAGE

S173

NO

DISCOUNT ? — NO

S175

YES

CALCULATE DISCOUNTED PRICE

S176

S174

DISPLAY/STORE REGISTRATION DATA ~ S177

UPDATE MANUFACTURING PERFORMANCE FILE ~ S178

RETURN